(19) Europäisches Patentamt
European Patent Office
Office européen des brevets

(11) **EP 4 759 627 A1**

(12) **EUROPEAN PATENT APPLICATION**
published in accordance with Art. 153(4) EPC

(43) Date of publication:
**17.06.2026 Bulletin 2026/25**

(21) Application number: **25814232.2**

(22) Date of filing: **28.02.2025**

(51) International Patent Classification (IPC):
**B60N 2/02** (2006.01)

(52) Cooperative Patent Classification (CPC):
**B60N 2/00; B60N 2/02; B60N 2/66; B60N 2/90**

(86) International application number:
**PCT/CN2025/080074**

(87) International publication number:
**WO 2025/246508 (04.12.2025 Gazette 2025/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.05.2024 CN 202410674595**

(71) Applicant: **HUAWEI TECHNOLOGIES CO., LTD.
Shenzhen 518129 (CN)**

(72) Inventors:
• **XU, Yiran
Shenzhen, Guangdong 518129 (CN)**
• **YAO, Zhuxi
Shenzhen, Guangdong 518129 (CN)**

• **YAO, Haicheng
Shenzhen, Guangdong 518129 (CN)**
• **ZHANG, Jingbo
Shenzhen, Guangdong 518129 (CN)**
• **LUO, Ting
Shenzhen, Guangdong 518129 (CN)**
• **YANG, Weitun
Shenzhen, Guangdong 518129 (CN)**
• **LIU, Zhen
Shenzhen, Guangdong 518129 (CN)**
• **CHEN, Jiayu
Shenzhen, Guangdong 518129 (CN)**
• **WANG, Sihan
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SEAT ADJUSTMENT METHOD AND ADJUSTMENT APPARATUS, AND SEAT AND VEHICLE**

(57) This application provides a seat adjustment method and an adjustment apparatus, a seat, and a vehicle. The adjustment method includes: obtaining a plurality of first pressure values detected by a plurality of headrest pressure detection units, where the plurality of first pressure values include at least one first target pressure value greater than a first threshold; determining a waist height of a user based on position information of a headrest pressure detection unit corresponding to the first target pressure value; and adjusting a height of a lumbar support of a seat based on the waist height. This application can improve precision and accuracy of lumbar support adjustment, and improve ride comfort of the seat.

300

Obtain a plurality of first pressure values at different positions of a headrest that are detected by a plurality of detection units of a headrest pressure sensor — 310

Determine a waist height of a user based on position information of a detection unit corresponding to a first target pressure value — 320

Adjust a height of a lumbar support of a seat based on the waist height — 330

FIG. 6

EP 4 759 627 A1

## Description

This application claims priority to Chinese Patent Application No. 202410674595.2, filed with the China National Intellectual Property Administration on May 27, 2024 and entitled "SEAT ADJUSTMENT METHOD AND ADJUSTMENT APPARATUS, SEAT, AND VEHICLE", which is incorporated herein by reference in its entirety.

## TECHNICAL FIELD

This application relates to the field of adaptive adjustment technologies, and in particular, to a seat adjustment method and an adjustment apparatus, a seat, and a vehicle.

## BACKGROUND

Among a plurality of parts of a seat in a cockpit of an automobile, a lumbar support is a part that is clearly felt by a user and has great impact on comfort. Currently, adaptive adjustment is mainly performed on the lumbar support based on posture information of the seat (for example, a tilt angle of a backrest). However, in the foregoing method, precision and accuracy of the adaptive adjustment on the lumbar support are relatively low. Inappropriate adjustment causes greater fatigue of a passenger, especially in a long-distance driving process. Therefore, other adjustment methods urgently need to be provided to resolve related technical problems in this aspect.

## SUMMARY

Embodiments of this application provide a seat adjustment method and an adjustment apparatus, a seat, and a vehicle, to improve precision and accuracy of lumbar support adjustment, and improve ride comfort of a seat.

According to a first aspect, a seat adjustment method is provided, including: obtaining a plurality of first pressure values detected by a plurality of detection units (that is, a plurality of headrest pressure detection units) of a headrest pressure sensor, where the plurality of first pressure values include at least one first target pressure value greater than a first threshold; determining a waist height of a user based on position information of a detection unit corresponding to the first target pressure value; and adjusting a height of a lumbar support of a seat based on the waist height.

The seat adjustment method provided in this embodiment of this application is implemented based on the headrest having the headrest pressure sensor with the plurality of detection units. The plurality of detection units may be arranged in an array at different positions of the headrest, so that pressure borne at a plurality of different positions of the headrest can be detected, and the plurality of first pressure values can be obtained. After obtaining the plurality of first pressure values, an adjustment apparatus determines that the plurality of first pressure values include the first target pressure value greater than the preset first threshold. This indicates that the headrest bears external pressure. In other words, it can be determined that the user sits on the seat and rests the head on the headrest.

A position of the detection unit corresponding to the first target pressure value is a pressure bearing position of the headrest, that is, a rest position of the back of the head of the user. Therefore, the position may be equivalent to a position of the back of the head of the user. It can be learned based on a skeleton model of a human body and a structural feature of the seat that there is a linear relationship between a waist height of the human body and a height of the back of the head. Therefore, the adjustment apparatus may determine the waist height of the user based on the position information of the detection unit corresponding to the first target pressure value and according to a preset empirical formula, algorithm, or the like. Then, the adjustment apparatus may adjust the height of the lumbar support of the seat based on the determined waist height, so that the height of the lumbar support can match the waist height of the user, thereby providing personalized support requirements for users with different heights.

According to the seat adjustment method provided in this embodiment of this application, the height of the lumbar support can be adaptively adjusted based on the waist height of the user, so that a requirement for real-time and dynamic adjustment of the lumbar support of the seat can be met. In addition, the lumbar support can be further adjusted with high accuracy and high precision, and appropriate waist support can be provided for users with different heights, so that ride comfort of the seat can be improved.

In some examples, the first threshold may be a relatively small value slightly greater than zero, and a purpose of setting the first threshold is to avoid false reporting of borne pressure caused by factors such as signal fluctuation and interference. Specifically, when the headrest does not bear external pressure, a detected value of the detection unit may not be zero due to factors such as signal fluctuation, interference, and a weight of a surface of the headrest. In some embodiments of this application, these cases can be excluded by setting the preset first threshold, to avoid that the head of the user is mistakenly considered to be rested on the headrest in a case that there is no person.

In some examples, compared with the foregoing first threshold related to false reporting of borne pressure, the first threshold may alternatively be a relatively large value. Increasing the first threshold can more accurately determine the pressure bearing position of the headrest (that is, the position of the back of the head of the user), in other words, help determine a main pressure bearing position of the headrest. In this way, the waist height of the user can be more accurately determined. This helps improve precision and accuracy of lumbar support adjustment, and improve ride comfort of the seat.

In some examples, the adjustment apparatus obtains the plurality of first pressure values detected by the plurality of detection units of the headrest pressure sensor. The plurality of detection units may be in one-to-one correspondence with the plurality of first pressure values, or at least one of the detection units may correspond to a plurality of (for example, two, three, or more) first pressure values. This is not limited in this embodiment of this application.

In some examples, there may be one or more first target pressure values greater than the first threshold in the plurality of first pressure values. When there is one first target pressure value, the waist height of the user may be determined based on position information of a detection unit corresponding to the unique target pressure value. When there are a plurality of first target pressure values, the waist height of the user may be determined based on position information of detection units corresponding to one or more or all of the plurality of first target pressure values.

In some examples, determining the waist height of the user based on the position information of the detection unit corresponding to the first target pressure value may be determining the waist height of the user based on height information of the detection unit corresponding to the first target pressure value (that is, the position information includes the height information); or may be determining the waist height of the user based on height information and horizontal position information of the detection unit corresponding to the first target pressure value (that is, the position information includes the height information and the horizontal position information). This is not specially limited in this embodiment of this application.

In some examples, the position information of the detection unit corresponding to the first target pressure value may be input into a neural network model, and data analysis is performed by using the neural network model to determine the waist height of the user. The neural network model is obtained through model training based on historical data (training data) and a deep learning algorithm. The neural network model may be, for example, a convolutional neural network (convolutional neural network, CNN) model, and the deep learning algorithm may be, for example, a machine learning (machine learning) algorithm or a meta learning (meta Learning) algorithm.

In some examples, that the adjustment apparatus determines the waist height of the user may be determining a height of an L3 vertebra of the user. However, this is not limited.

In some examples, the lumbar support may include one or more lumbar support airbags; or the lumbar support may not include a lumbar support airbag. In this case, the lumbar support may alternatively exist in another form, for example, may include another elastic or flexible support part. A specific existence form of the lumbar support is not specially limited in this application.

In some examples, adjusting the height of the lumbar support of the seat based on the determined waist height may be raising or lowering the lumbar support, so that the height of the lumbar support matches the waist height of the user. For example, the lumbar support is made opposite to a waist of the user, so that the lumbar support can provide appropriate and accurate waist support for the user, thereby improving ride comfort.

For example, the waist height may be used as a target height of the lumbar support. If a current height of the lumbar support is lower than the target height, the lumbar support may be raised until the height of the lumbar support reaches the target height. If a current height of the lumbar support is higher than the target height, the lumbar support may be lowered until the height of the lumbar support reaches the target height.

In a possible implementation, determining the waist height of the user includes: when the plurality of first pressure values include a plurality of first target pressure values, determining the waist height based on position information of a target detection unit corresponding to a largest pressure value in the plurality of first target pressure values (that is, a largest value in the plurality of first pressure values).

As a most convex point on the back of the head, an opisthocranion (opisthocranion) applies a largest extrusion force on the headrest. Therefore, a position of the target detection unit corresponding to the largest pressure value may be equivalent to an opisthocranion position of the user. It can be learned based on a skeleton model of a human body and a structural feature of the seat that a height of the opisthocranion is usually in a linear relationship with the waist height of the user. Therefore, the waist height of the user may be further determined based on the opisthocranion position. In fact, as an intermediate variable, the opisthocranion position may not be reflected in a calculation process. Based on the foregoing processing logic, the adjustment apparatus may directly determine the waist height of the user based on the position information of the target detection unit corresponding to the largest pressure value and according to a preset empirical parameter, an empirical formula, a preset algorithm or model (for example, an AI model), or the like. Compared with the foregoing embodiment, in this embodiment, the waist height of the user is determined by using the position information of the target detection unit, so that accuracy and precision of waist height detection can be improved, thereby helping improve accuracy and precision of lumbar support adjustment and improve ride comfort of the seat.

In some examples, determining the waist height of the user based on the position information of the target detection unit may be determining the waist height of the user based on height information of the target detection unit (that is, the position information includes the height information); or may be determining the waist height of the user based on height information and horizontal position information of the target detection unit (that is, the position information includes the height information and the horizontal position information). This is not specially limited in this embodiment of this application.

In a possible implementation, determining the waist height of the user includes: determining a pressure centroid position based on position information and first pressure values corresponding to M detection units, where the M detection units include the target detection unit and M-1 detection units located in a preset range around the target detection unit, and M is an integer greater than or equal to 2 ($M \geq 2$); and determining the waist height based on the pressure centroid position.

The adjustment apparatus obtains the plurality of first pressure values detected by the plurality of detection units. The target detection unit corresponding to the largest pressure value is closest to an opisthocranion position of the user, but it cannot be ensured that a position of the target detection unit definitely overlaps the opisthocranion position of the user. For example, the opisthocranion position of the user may be located between two adjacent detection units. Therefore, in this embodiment of this application, the pressure centroid position is first calculated based on the largest pressure value and at least one first pressure value in a preset range around the largest pressure value, and then the pressure centroid position may be equivalent to the opisthocranion position of the user, so that the determined opisthocranion position can be more accurate. Compared with directly equating the position of the target detection unit with the opisthocranion position of the user, in this embodiment, the pressure centroid position is calculated and the pressure centroid position is equivalent to the opisthocranion position of the user, so that accuracy and precision of waist height detection can be improved, thereby helping improve accuracy and precision of lumbar support adjustment and improve ride comfort of the seat.

In a possible implementation, determining the waist height of the user includes: determining a sitting height of the user based on the position information of the detection unit corresponding to the first target pressure value; and determining the waist height based on the sitting height.

An opisthocranion height of the user is in a linear relationship with the sitting height, and the sitting height is in a linear relationship with the waist height. Therefore, the sitting height of the user may be first determined based on the pressure centroid position, and then the waist height of the user is determined based on the sitting height. Through the foregoing setting, accuracy and precision of waist height detection can be improved. This can improve accuracy and precision of lumbar support adjustment and improve ride comfort of the seat.

In a possible implementation, adjusting the height of the lumbar support of the seat includes: controlling a lumbar support adjustment component based on the lumbar support adjustment component, to adjust the height of the lumbar support.

In a possible implementation, the lumbar support includes a plurality of lumbar support airbags successively disposed in a height direction, and adjusting the height of the lumbar support of the seat includes: performing an inflation operation and/or a deflation operation on the plurality of lumbar support airbags, to adjust the height of the lumbar support.

For example, if the determined waist height is higher than a current lumbar support height, an uninflated lumbar support airbag at a higher position may be inflated to raise the lumbar support. Optionally, an inflated lumbar support airbag at a current lowest position may be further deflated, to ensure that a support area of the lumbar support remains unchanged. If the determined waist height is lower than a current lumbar support height, an inflated lumbar support airbag at a highest position may be deflated to lower the lumbar support. Optionally, an uninflated lumbar support airbag at a current lower position may be further inflated, to ensure that a support area of the lumbar support remains unchanged.

In some examples, the lumbar support includes two lumbar support airbags successively disposed in the height direction. The lumbar support airbags located at different heights may be inflated and/or deflated to accurately support waists of users with different heights. For example, if the waist height of the user determined by the adjustment apparatus is greater than a first height threshold, an upper lumbar support airbag is inflated; if the waist height is less than the first height threshold but greater than a second height threshold, both upper and lower lumbar support airbags are inflated; or if the waist height is less than the second height threshold, the lower lumbar support airbag is inflated.

In a possible implementation, the adjustment method further includes: obtaining a plurality of second pressure values detected by a plurality of detection units (that is, a plurality of backrest pressure detection units) of a backrest pressure sensor, where the plurality of second pressure values include at least one second target pressure value greater than a second threshold; and determining the waist height of the user includes: determining the waist height based on position information of detection units corresponding to the first target pressure value and the second target pressure value.

A sitting posture difference affects a contact position between the back of the head and the headrest. For example, a bent upper body has a lower contact position between the head of the user and the headrest than a straight upper body. In other words, a sitting posture affects a linear relationship between a height of the back of the head and the waist height. Based on this, the adjustment method provided in this embodiment of this application further considers impact of the sitting posture on a waist height calculation result. The adjustment apparatus may further obtain the plurality of second pressure values at the different positions of the backrest that are detected by the plurality of detection units of the backrest pressure sensor. A position of the detection unit corresponding to the second target pressure value greater than the preset second threshold can represent the sitting posture of the user. Therefore, the waist height of the user may be determined jointly based on the position information of the detection units corresponding to the first target pressure value and the second target pressure value. In this way, the waist height obtained through calculation is more accurate. This helps improve accuracy and precision of lumbar support adjustment and improve ride comfort of the seat.

In some examples, the plurality of detection units of the backrest pressure sensor may be arranged in an array at the different positions of the backrest, so that pressure borne at the plurality of different positions of the backrest can be detected and the plurality of second pressure values can be obtained. Herein, for ease of differentiation and understanding, a pressure value detected by the detection unit of the headrest pressure sensor is expressed as the first pressure value, and a pressure value greater than the first threshold in the first pressure values is expressed as the first target pressure value; and a pressure value detected by the detection unit of the backrest pressure sensor is expressed as the second pressure value, and a pressure value greater than the second threshold in the second pressure values is expressed as the second target pressure value.

In some examples, similar to the first threshold, the second threshold may be a relatively small value slightly greater than zero, and a purpose of setting the second threshold is to avoid false reporting of borne pressure caused by factors such as signal fluctuation and interference. Specifically, when the backrest does not bear external pressure, a detected value of the detection unit may not be zero due to factors such as signal fluctuation, interference, and a weight of a surface of the backrest. In some embodiments of this application, these cases can be excluded by setting the preset second threshold, to avoid that the back of the user is mistakenly considered to be attached to the backrest in a case that there is no person. The first threshold may be equal to or different from the second threshold. For example, the first threshold may be greater than, equal to, or less than the second threshold. This is not specially limited in this embodiment of this application.

In some examples, compared with the foregoing second threshold related to false reporting of borne pressure, the second threshold may alternatively be a relatively large value. Increasing the second threshold can more accurately determine the pressure bearing position of the backrest (that is, the position of the back of the user), in other words, help determine a main pressure bearing position of the backrest. In this way, the sitting posture and the waist height of the user can be more accurately determined. This helps improve precision and accuracy of lumbar support adjustment, and improve ride comfort of the seat.

In some examples, the adjustment apparatus obtains the plurality of second pressure values detected by the plurality of detection units of the backrest pressure sensor. The plurality of detection units may be in one-to-one correspondence with the plurality of second pressure values, or at least one of the detection units may correspond to a plurality of (for example, two, three, or more) second pressure values. This is not limited in this embodiment of this application.

In some examples, there may be one or more second target pressure values greater than the second threshold in the plurality of second pressure values. When there is one second target pressure value, the waist height of the user may be determined based on position information of a detection unit corresponding to the unique target pressure value. When there are a plurality of second target pressure values, the waist height of the user may be determined based on position information of detection units corresponding to one or more or all of the plurality of second target pressure values.

In some examples, that the adjustment apparatus determines the waist height of the user based on the position information of the detection units corresponding to the first target pressure value and the second target pressure value may be as follows:

The adjustment apparatus determines the waist height of the user based on position information of detection units corresponding to a largest pressure value in the first target pressure value and the second target pressure value.

Alternatively, the adjustment apparatus determines the waist height of the user based on position information of detection units corresponding to a largest pressure value in the first target pressure value and a largest pressure value in the second target pressure value (that is, a largest value in the plurality of second pressure values).

Alternatively, the adjustment apparatus determines the waist height of the user based on position information of a detection unit corresponding to a largest pressure value in the first target pressure value and a centroid position of pressure applied by the user on the backrest.

In some examples, that the adjustment apparatus determines the waist height of the user based on the position information of the detection units corresponding to the first target pressure value and the second target pressure value may alternatively be as follows:

The adjustment apparatus determines the waist height of the user based on a centroid position of pressure applied by the user on the headrest and the position information of the detection unit corresponding to the second target pressure value.

Alternatively, the adjustment apparatus determines the waist height of the user based on a centroid position of pressure applied by the user on the headrest and position information of a detection unit corresponding to a largest pressure value in the second target pressure value.

Alternatively, the adjustment apparatus determines the waist height of the user based on a centroid position of pressure applied by the user on the headrest and a centroid position of pressure applied by the user on the backrest.

In some examples, that the adjustment apparatus determines the waist height of the user based on the position information of the detection units corresponding to the first target pressure value and the second target pressure value may alternatively be as follows:

The adjustment apparatus determines a sitting height of the user based on the position information of the detection units corresponding to the first target pressure value and the second target pressure value; and the adjustment apparatus determines the waist height of the user based on the sitting height.

In a possible implementation, the adjustment method further includes: obtaining a plurality of second pressure values detected by a plurality of detection units (that is, a plurality of backrest pressure detection units) of a backrest pressure sensor, where the plurality of second pressure values include a plurality of second target pressure values greater than a second threshold; determining a back width of the user based on position information of detection units corresponding to the second target pressure values; determining a target inflation volume of a side wing airbag of the seat based on the back width, where the back width is negatively correlated with the target inflation volume; and adjusting an inflation volume of the side wing airbag based on the target inflation volume.

The seat adjustment method provided in this embodiment of this application is implemented based on the backrest having the backrest pressure sensor with the plurality of detection units. The plurality of detection units may be arranged in an array at different positions of the backrest, so that pressure borne at a plurality of different positions of the backrest can be detected, and the plurality of second pressure values can be obtained.

A position of the detection unit corresponding to the second target pressure value greater than the second threshold in the plurality of second pressure values is a pressure bearing position of the backrest, a pressure bearing region including a plurality of detection units corresponding to a plurality of second target pressure values corresponds to a back region of the user, and a distance between detection units on left and right edges corresponds to the back width of the user. Therefore, the back width of the user may be determined based on the position information of the detection unit corresponding to the second target pressure value, and the target inflation volume of the side wing airbag is determined based on the back width. The back width is negatively correlated with the target inflation volume of the side wing airbag. In other words, a wider back of the user indicates a smaller target inflation volume of the side wing airbag, and a narrower back of the user indicates a larger target inflation volume of the side wing airbag. Then, the adjustment apparatus may adjust the inflation volume of the side wing airbag based on the target inflation volume, for example, enable the inflation volume of the side wing airbag to reach the target inflation volume.

In some embodiments of this application, through the foregoing setting, adaptive adjustment of the inflation volume of the side wing airbag may be implemented based on the back width of the user, so that the inflation volume of the side wing airbag matches the back width of the user. For example, a wider back of the user indicates a smaller target inflation volume of the side wing airbag, so that transverse space of the seat can be increased and a clamping force on the user can be reduced. A narrower back of the user indicates a larger target inflation volume of the side wing airbag, so that transverse space of the seat can be reduced to implement reliable clamping on the user and provide a sufficient lateral support force. In this application, personalized ride requirements can be provided for users with different physiques, and ride comfort and safety of the user can be improved.

In some examples, considering that a difference between acting forces applied by users with different weights on the backrest may be relatively large, in this embodiment of this application, the second threshold may be determined based on a largest pressure value in the second target pressure values (that is, a largest pressure value in the plurality of second pressure values). For example, the second threshold may be equal to the largest pressure value * a preset coefficient (for example, may be 0.1, 0.2, 0.3, 0.4, or 0.5). In this way, there may be different second thresholds for users with different weights, so that back widths of the users with different weights can be accurately detected.

In some examples, the adjustment apparatus determines the target inflation volume of the side wing airbag based on the back width and a preset mapping relationship. The mapping relationship indicates a correspondence between different back widths and different target inflation volumes, and the back width is negatively correlated with the target inflation volume.

In other words, the adjustment apparatus may determine target inflation volumes of side wing airbags on left and right sides based on the preset mapping relationship. The mapping relationship is preferably a negative correlation, that is, a wider physique of the passenger indicates a smaller target inflation volume of the side wing airbag. A specific value in the mapping relationship may be obtained by fitting experimental data. After determining a value of the target inflation volume, the adjustment apparatus controls air pumps and valves that are connected to the side wing airbags on the left and right sides, to adjust inflation volumes of the side wing airbags to the target inflation volumes.

In some examples, the target inflation volume may be an initial inflation volume. To be specific, the adjustment method provided in this embodiment of this application may be applied to a scenario in which the user just sits on the seat. In this case, the adjustment apparatus may determine, according to the adjustment method, initial inflation volumes of the side wing airbags on the left and right sides, and then adjust the inflation volumes of the side wing airbags based on the initial inflation volumes, so that the user has high ride comfort and safety.

In some examples, that the adjustment apparatus adjusts the inflation volume of the side wing airbag based on the target inflation volume may be specifically: if the target inflation volume is greater than a current inflation volume of the side wing airbag, performing an inflation operation on the side wing airbag until the inflation volume of the airbag reaches the target inflation volume; or if the target inflation volume is less than a current inflation volume of the side wing airbag, performing a deflation operation on the side wing airbag until the inflation volume of the airbag reaches the target inflation volume.

In a possible implementation, the adjustment method further includes: obtaining a plurality of third pressure values at different positions of a leg rest that are detected by a plurality of detection units (that is, a plurality of leg rest pressure detection units) of a leg rest pressure sensor, where the plurality of third pressure values include at least one third target pressure value greater than a third threshold; determining a leg length of the user based on position information of a detection unit corresponding to the third target pressure value; and adjusting the seat based on the leg length.

The seat adjustment method provided in this embodiment of this application is implemented based on the leg rest having the leg rest pressure sensor with the plurality of detection units. The plurality of detection units may be arranged in an array at different positions of the leg rest, so that pressure borne at a plurality of different positions of the leg rest can be detected, and the plurality of third pressure values can be obtained. After obtaining the plurality of third pressure values, the adjustment apparatus determines that the plurality of third pressure values include the third target pressure value greater than the preset third threshold. This indicates that the leg rest bears external pressure. In other words, it can be determined that the user sits on the seat and shins are supported on the leg rest.

A position of the detection unit corresponding to the third target pressure value is a pressure bearing position of the leg rest, that is, an attachment position of a gastrocnemius of the shin of the user. Therefore, the position may be equivalent to a gastrocnemius position of the user. It can be learned based on a skeleton model of a human body and a size feature of the seat that a distance between the knee and the gastrocnemius of the user is in a linear relationship with the leg length, and the distance is in a linear relationship with a distance between the detection unit corresponding to the third target pressure value and an edge that is of the leg rest and that is adjacent to a cushion. Therefore, the leg length of the user may be predicted based on the position information of the detection unit corresponding to the third target pressure value and according to a preset empirical formula. Then, the adjustment apparatus may perform adaptive adjustment on the seat based on the determined leg length, so that personalized ride requirements can be provided for users with different heights, and then ride comfort of the seat can be improved.

In some examples, the third threshold may be a relatively small value slightly greater than zero, and a purpose of setting the third threshold is to avoid false reporting of borne pressure caused by factors such as signal fluctuation and interference. Specifically, when the leg rest does not bear external pressure, a detected value of the detection unit may not be zero due to factors such as signal fluctuation, interference, and a weight of a surface of the leg rest. In some embodiments of this application, these cases can be excluded by setting the preset third threshold, to avoid that the leg of the user is mistakenly considered to be supported on the leg rest in a case that there is no person.

In some examples, compared with the foregoing third threshold related to false reporting of borne pressure, the third threshold may alternatively be a relatively large value. Increasing the third threshold can more accurately determine the pressure bearing position of the leg rest (that is, the gastrocnemius position of the user), in other words, help determine a main pressure bearing position of the leg rest. In this way, the leg length of the user can be more accurately determined. This helps improve precision and accuracy of seat adjustment, and improve ride comfort of the seat.

In some examples, the adjustment apparatus obtains the plurality of third pressure values detected by the plurality of detection units of the leg rest pressure sensor. The plurality of detection units may be in one-to-one correspondence with the plurality of third pressure values, or at least one of the detection units may correspond to a plurality of (for example, two, three, or more) third pressure values. This is not limited in this embodiment of this application.

In some examples, there may be one or more third target pressure values greater than the third threshold in the plurality of third pressure values. When there is one third target pressure value, the waist height of the user may be determined based on position information of a detection unit corresponding to the unique target pressure value. When there are a plurality of third target pressure values, the leg length of the user may be determined based on position information of detection units corresponding to one or more or all of the plurality of third target pressure values.

In some examples, that the adjustment apparatus adjusts the seat based on the leg length may include at least one of the following adjustments: performing front-rear adjustment on the cushion, performing high-low adjustment on the cushion, adjusting a tilt angle of the cushion, adjusting an extend-retract amount of the leg rest, adjusting a rotation angle of the leg rest, and the like.

In some examples, that the adjustment apparatus adjusts the seat based on the leg length may be: determining a parameter such as a height and/or a physique of the user based on the leg length, and then adjusting the seat based on the parameter such as the height and/or the physique.

In some examples, determining the leg length of the user based on the position information of the detection unit corresponding to the third target pressure value may be: The adjustment apparatus determines the leg length of the user based on position information of a target detection unit corresponding to a largest pressure value in the third target pressure value.

As a most convex point on the shin, a gastrocnemius center applies a largest extrusion force on the leg rest. Therefore, a position of the target detection unit corresponding to the largest pressure value may be equivalent to a gastrocnemius center position of the user. It can be learned based on a skeleton model of a human body and a structural feature of the seat that a distance between the knee and the gastrocnemius center of the user is in a linear relationship with the leg length, and the distance is in a linear relationship with a distance between the detection unit corresponding to the third target pressure value and an edge that is of the leg rest and that is adjacent to a cushion. Therefore, the leg length of the user may be predicted based on the position information of the target detection unit and with reference to a preset empirical formula. Through the foregoing setting, accuracy and precision of leg length measurement can be improved. This helps improve accuracy and precision of seat adjustment and improve ride comfort of the seat.

In some examples, determining the leg length of the user may be: determining a pressure centroid position of the leg rest based on position information and third pressure values corresponding to S detection units, where the S detection units include the target detection unit and S-1 detection units located in a preset range around the target detection unit, and S is an integer greater than or equal to 2 ($S \geq 2$); and determining the leg length based on the pressure centroid position of the leg rest.

The adjustment apparatus obtains the plurality of third pressure values detected by the plurality of detection units. The target detection unit corresponding to the largest pressure value is closest to a gastrocnemius center position of the user, but it cannot be ensured that a position of the target detection unit definitely overlaps the gastrocnemius center position of the user. Therefore, in this embodiment of this application, the pressure centroid position is first calculated based on the largest pressure value and at least one third pressure value in a preset range around the largest pressure value, and then the pressure centroid position may be equivalent to the gastrocnemius center position of the user, so that the determined gastrocnemius center position can be more accurate. Compared with directly equating the position of the target detection unit with the gastrocnemius center position of the user, in this embodiment, the pressure centroid position is calculated and the pressure centroid position is equivalent to the gastrocnemius center position of the user, so that accuracy and precision of leg length detection can be improved, thereby helping improve accuracy and precision of seat adjustment and improve ride comfort of the seat.

In a possible implementation, the adjustment method further includes: obtaining a plurality of fourth pressure values detected by a plurality of detection units (that is, a plurality of cushion pressure detection units) of a cushion pressure sensor, where the plurality of fourth pressure values include at least one fourth target pressure value greater than a fourth threshold; and determining the leg length of the user includes: determining the leg length based on position information of detection units corresponding to the third target pressure value and the fourth target pressure value.

A sitting posture difference affects a contact position between the leg and the leg rest. Based on this, the adjustment method provided in this embodiment of this application further considers impact of the sitting posture on a leg length calculation result. The adjustment apparatus may further obtain the plurality of fourth pressure values at the different positions of the cushion that are detected by the plurality of detection units of the cushion pressure sensor. A position of the detection unit corresponding to the fourth target pressure value greater than the preset fourth threshold can represent the sitting posture of the user. Therefore, the leg length of the user may be determined jointly based on the position information of the detection units corresponding to the third target pressure value and the fourth target pressure value. In this way, the leg length obtained through calculation is more accurate. This helps improve accuracy and precision of seat adjustment and improve ride comfort of the seat.

In some examples, similar to the first threshold, the second threshold, and the third threshold, the fourth threshold may be a relatively small value slightly greater than zero, and a purpose of setting the fourth threshold is to avoid false reporting of borne pressure caused by factors such as signal fluctuation and interference. Specifically, when the cushion does not bear external pressure, a detected value of the detection unit may not be zero due to factors such as signal fluctuation, interference, and a weight of a surface of the cushion. In some embodiments of this application, these cases can be excluded by setting the preset fourth threshold, to avoid that the back of the user is mistakenly considered to be attached to the cushion in a case that there is no person. The first threshold, the second threshold, the third threshold, and the fourth threshold may be completely equal, partially equal, or completely unequal. This is not specially limited in embodiments of this application.

In some examples, compared with the foregoing fourth threshold related to false reporting of borne pressure, the fourth threshold may alternatively be a relatively large value. Increasing the fourth threshold can more accurately determine the pressure bearing position of the cushion (that is, the position of the hip of the user), in other words, help determine a main pressure bearing position of the cushion. In this way, the sitting posture and the leg length of the user can be more accurately determined. This helps improve precision and accuracy of seat adjustment, and improve ride comfort of the seat.

In some examples, the adjustment apparatus obtains the plurality of fourth pressure values detected by the plurality of detection units of the cushion pressure sensor. The plurality of detection units may be in one-to-one correspondence with the plurality of fourth pressure values, or at least one of the detection units may correspond to a plurality of (for example, two, three, or more) fourth pressure values. This is not limited in this embodiment of this application.

In some examples, there may be one or more fourth target pressure values greater than the fourth threshold in the plurality of fourth pressure values. When there is one fourth target pressure value, the waist height of the user may be determined based on position information of a detection unit corresponding to the unique target pressure value. When there are a plurality of fourth target pressure values, the waist height of the user may be determined based on position information of detection units corresponding to one or more or all of the plurality of fourth target pressure values.

In some examples, that the adjustment apparatus determines the leg length of the user based on the position information of the detection units corresponding to the third target pressure value and the fourth target pressure value may be:

The adjustment apparatus determines the leg length of the user based on position information of detection units corresponding to a largest pressure value in the third target pressure value and the fourth target pressure value.

Alternatively, the adjustment apparatus determines the leg length of the user based on position information of detection units corresponding to a largest pressure value in the third target pressure value and a largest pressure value in the fourth target pressure value (that is, a largest value in the plurality of fourth pressure values).

Alternatively, the adjustment apparatus determines the leg length of the user based on position information of a detection unit corresponding to a largest pressure value in the third target pressure value and a centroid position of pressure applied by the user on the cushion.

In some examples, that the adjustment apparatus determines the leg length of the user based on the position information of the detection units corresponding to the third target pressure value and the fourth target pressure value may alternatively be:

The adjustment apparatus determines the leg length of the user based on a centroid position of pressure applied by the user on the leg rest and the position information of the detection unit corresponding to the fourth target pressure value.

Alternatively, the adjustment apparatus determines the leg length of the user based on a centroid position of pressure applied by the user on the leg rest and position information of a detection unit corresponding to a largest pressure value in the fourth target pressure value.

Alternatively, the adjustment apparatus determines the leg length of the user based on a centroid position of pressure applied by the user on the leg rest and a centroid position of pressure applied by the user on the cushion.

According to a second aspect, a seat adjustment apparatus is provided, including: an obtaining unit, configured to obtain a plurality of first pressure values detected by a plurality of headrest pressure detection units, where the plurality of first pressure values include at least one first target pressure value greater than a first threshold; a determining unit, configured to determine a waist height of a user based on position information of a headrest pressure detection unit corresponding to the first target pressure value; and an adjustment unit, configured to adjust a height of a lumbar support of a seat based on the waist height.

In a possible implementation, the determining unit is specifically configured to: when the plurality of first pressure values include a plurality of first target pressure values, determine the waist height based on position information of a target detection unit corresponding to a largest pressure value in the plurality of first target pressure values.

In a possible implementation, the determining unit is specifically configured to: determine a pressure centroid position based on position information and first pressure values corresponding to M headrest pressure detection units, where the M headrest pressure detection units include the target detection unit and M-1 headrest pressure detection units located in a preset range around the target detection unit, and M is an integer greater than or equal to 2; and determine the waist height based on the pressure centroid position.

In a possible implementation, the determining unit is specifically configured to: determine a sitting height of the user based on the position information of the headrest pressure detection unit corresponding to the first target pressure value; and determine the waist height based on the sitting height.

In a possible implementation, the adjustment unit is specifically configured to control a lumbar support adjustment component based on the lumbar support adjustment component, to adjust the height of the lumbar support.

In a possible implementation, the lumbar support includes a plurality of lumbar support airbags successively disposed in a height direction, and the adjustment unit is specifically configured to perform an inflation operation and/or a deflation operation on the plurality of lumbar support airbags, to adjust the height of the lumbar support.

In a possible implementation, the obtaining unit is further configured to obtain a plurality of second pressure values detected by a plurality of backrest pressure detection units, where the plurality of second pressure values include at least one second target pressure value greater than a second threshold.

The determining unit is specifically configured to determine the waist height based on the position information of the headrest pressure detection unit corresponding to the first target pressure value and position information of a backrest pressure detection unit corresponding to the second target pressure value.

In a possible implementation, the obtaining unit is further configured to obtain a plurality of second pressure values detected by a plurality of backrest pressure detection units, where the plurality of second pressure values include a plurality of second target pressure values greater than a second threshold; the determining unit is further configured to: determine a back width of the user based on position information of backrest pressure detection units corresponding to the second target pressure values; and determine a target inflation volume of a side wing airbag of the seat based on the back width, where the back width is negatively correlated with the target inflation volume; and the adjustment unit is further configured to adjust an inflation volume of the side wing airbag based on the target inflation volume.

In a possible implementation, the obtaining unit is further configured to obtain a plurality of third pressure values detected by a plurality of leg rest pressure detection units, where the plurality of third pressure values include at least one third target pressure value greater than a third threshold; the determining unit is further configured to determine a leg length of the user based on position information of a leg rest pressure detection unit corresponding to the third target pressure value; and the adjustment unit is further configured to adjust the seat based on the leg length.

In a possible implementation, the obtaining unit is further configured to obtain a plurality of fourth pressure values detected by a plurality of cushion pressure detection units, where the plurality of fourth pressure values include at least one fourth target pressure value greater than a fourth threshold; and the determining unit is specifically configured to determine the leg length based on position information of a leg rest pressure detection unit corresponding to the third target pressure value and position information of a cushion pressure detection unit corresponding to the fourth target pressure value.

According to a third aspect, a seat adjustment apparatus is provided, including: a memory, where the memory stores instructions; and a processor, where when the instructions are run by the processor, the adjustment apparatus is enabled to perform the method provided in any one of the possible implementations of the first aspect.

According to a fourth aspect, a computer-readable storage medium is provided. The computer-readable storage medium stores a computer program. When the computer program is run on a computer, the computer is enabled to perform the method provided in any one of the possible implementations of the first aspect.

According to a fifth aspect, a computer program product is provided, including computer program code. When the computer program code is run on a computer, the computer is enabled to perform the method provided in any one of the possible implementations of the first aspect.

According to a sixth aspect, a chip system is provided, including a memory and a processor. The memory is configured to store a computer program, and the processor is configured to invoke the computer program from the memory and run the computer program, so that a device in which the chip system is installed performs the method provided in any one of the possible implementations of the first aspect.

According to a seventh aspect, a seat is provided, including: a headrest; a headrest pressure sensor, including a plurality of detection units arranged in an array at different positions of the headrest, where the headrest pressure sensor is configured to detect a value of pressure applied by a head of a user on the headrest; and the adjustment apparatus provided in any one of the possible implementations of the second aspect or the third aspect, where the adjustment apparatus is in communication connection to the headrest pressure sensor.

According to an eighth aspect, a vehicle is provided, including the adjustment apparatus provided in any one of the possible implementations of the second aspect or the third aspect, or including one or more (for example, two, three, or four) seats provided in the seventh aspect.

## BRIEF DESCRIPTION OF DRAWINGS

FIG. 1 is a diagram of a structure of a seat according to an embodiment of this application;
FIG. 2 is a diagram of an internal structure of a seat according to an embodiment of this application;
FIG. 3 is a diagram of installation of an example of a pressure sensor according to an embodiment of this application;
FIG. 4 is a diagram of an adaptive adjustment procedure of a seat according to an embodiment of this application;
FIG. 5 is a pressure distribution image drawn based on data of pressure applied by a passenger to different positions of a seat;
FIG. 6 is a schematic flowchart of an example of a seat adjustment method according to an embodiment of this application;
FIG. 7 is a schematic flowchart of another example of a seat adjustment method according to an embodiment of this application;
FIG. 8 is a schematic flowchart of another example of a seat adjustment method according to an embodiment of this application;
FIG. 9 is a diagram of distribution of pressure centroid positions corresponding to different types of headrest pressure sensors;
FIG. 10 is a diagram of a principle of determining a waist height of a user based on a pressure centroid position of a headrest;

FIG. 11 is a schematic flowchart of another example of a seat adjustment method according to an embodiment of this application;

FIG. 12 is a schematic flowchart of another example of a seat adjustment method according to an embodiment of this application;

FIG. 13 is a diagram of a principle of detecting a back width of a user by using a backrest pressure sensor;

FIG. 14 is a diagram of a principle of detecting a sitting posture of a user by using a backrest pressure sensor;

FIG. 15 is a diagram of a correspondence between a lumbar lordosis angle and a posture of a human body;

FIG. 16 is a schematic flowchart of another example of a seat adjustment method according to an embodiment of this application;

FIG. 17 is a schematic flowchart of another example of a seat adjustment method according to an embodiment of this application;

FIG. 18 is a diagram of a principle of determining a leg length of a user based on a pressure centroid position of a leg rest;

FIG. 19 is a schematic flowchart of another example of a seat adjustment method according to an embodiment of this application;

FIG. 20 is a block diagram of a seat adjustment apparatus according to an embodiment of this application; and

FIG. 21 is a diagram of a structure of a seat adjustment apparatus according to an embodiment of this application.

Reference numerals:

seat 100; cushion 110; backrest 120; lumbar support airbag 121; lumbar support airbag height adjustment component 122; headrest height adjustment component 123; headrest 130; leg rest 140; adjustment base 150; side wing 160; side wing airbag 161; adjustment mechanism 170; control apparatus 180; air pump 181; and transverse acceleration sensor 182; and

pressure sensor 200; detection unit 200a; target detection unit 200b; cushion pressure sensor 210; backrest pressure sensor 220; headrest pressure sensor 230; and leg rest pressure sensor 240.

## DESCRIPTION OF EMBODIMENTS

The following describes technical solutions of this application with reference to accompanying drawings. It is clear that the described embodiments are merely some but not all of embodiments of this application.

In the following descriptions, for illustration instead of limitation, specific details such as a particular system structure and a technology are provided to make a thorough understanding of embodiments of this application. However, persons skilled in the art should know that this application may also be implemented in other embodiments without these specific details. In other cases, detailed descriptions of well-known systems, apparatuses, circuits, and methods are omitted, so that this application is described without being obscured by unnecessary details.

The term "include" in this specification indicates the presence of a described feature, entirety, step, operation, element, and/or component, but does not exclude the presence or addition of one or more other features, entireties, steps, operations, elements, components, and/or sets thereof. The terms "include", "contain", "have", and variations thereof all mean "including but not limited to", unless otherwise specifically emphasized in another manner.

The following terms "first" and "second" are merely used for description, but should not be understood as indicating or implying relative importance or implying a quantity of indicated technical features. Therefore, a feature limited by "first" or "second" may explicitly or implicitly include one or more features. In descriptions of embodiments of this application, unless otherwise stated, "a plurality of" means two or more.

The term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

With gradual development of automobile intelligence, the concept of intelligent cockpit emerges and becomes the key development direction of automobiles in the future. A seat is an important constituent part of the cockpit, and a seat adjustment manner also becomes intelligent. An adaptive seat adjustment system based on a sensor technology can improve ride comfort and safety of a passenger, and has been widely popularized in the current automobile industry.

The adaptive seat adjustment system usually includes a plurality of sensors and a control apparatus. The plurality of sensors are installed on the seat, and are configured to sense information such as a height, a weight, and a physique of the passenger. The control apparatus is configured to automatically adjust the seat to an optimal position based on the foregoing information, so that each part of the seat can fully fit a corresponding part of a human body, to provide personalized comfortable experience for the passenger.

Among a plurality of parts of the seat, a lumbar support is a part that is clearly felt by a user and has great impact on comfort. The lumbar support is mainly configured to provide a support force for a waist of the passenger, to ensure ride comfort. Through the adaptive adjustment system, the seat can intelligently adapt to different sitting postures of the passenger. A gap between the waist of the passenger and a backrest is filled by adjusting a height of the lumbar support, to automatically fit and support the waist of the passenger.

Currently, adaptive adjustment is mainly performed on the lumbar support based on posture information of the seat (for example, a tilt angle of the backrest or an extension length of a leg rest). However, in the foregoing method, precision and accuracy of the adaptive adjustment on the lumbar support are relatively low. Inappropriate adjustment causes greater fatigue of the passenger, especially in a long-distance driving process. Therefore, other adjustment methods urgently need to be provided to resolve related technical problems in this aspect.

In view of this, embodiments of this application provide a seat adjustment method. In the adjustment method, a waist height of a user is determined by using a plurality of pressure values at different positions of a headrest that are detected by a headrest pressure sensor, and then a height of a lumbar support is adjusted based on the waist height. According to the adjustment method provided in embodiments of this application, the lumbar support can be adjusted with high accuracy and high precision, and appropriate waist support can be provided for a passenger, so that ride comfort of a seat can be improved.

The seat adjustment method provided in embodiments of this application may be applied to a seat. The seat may be, for example, an intelligent seat or a zero gravity seat (zero gravity seat). The following first describes a seat provided in embodiments of this application, that is, first describes an application background of the adjustment method.

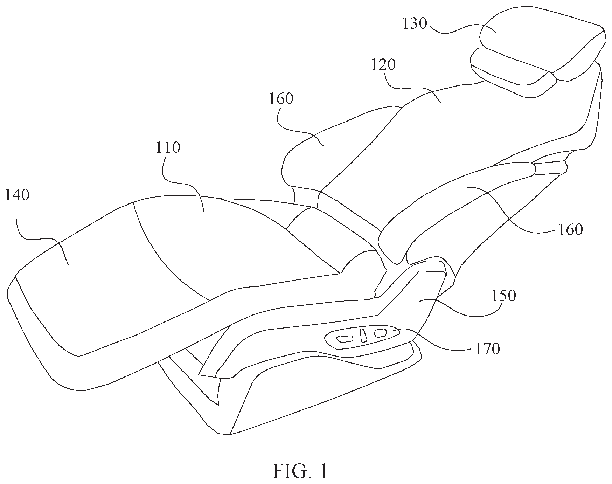

FIG. 1 is a diagram of a structure of a seat 100 according to an embodiment of this application. The seat 100 provided in this embodiment of this application may be a seat of any vehicle like an automobile, a train, a bullet train, a high-speed train, or an airplane, or may be another seat that has a comfort requirement, for example, a household or commercial massage chair or a home chair. However, this is not limited. The automobile may be, for example, a car, a truck, a passenger bus, a pickup truck, a multi-purpose vehicle (multi-purpose vehicle, MPV), or a sport utility vehicle (sport utility vehicle, SUV). In addition, the automobile may be a fuel vehicle, or may be a new energy vehicle like a battery electric vehicle, a hybrid electric vehicle, or an extended-range electric vehicle. The automobile may be an automobile having some or all autonomous driving functions. A type, a form, or the like of the automobile is not limited in this application. The following uses an example in which the seat 100 is used in an automobile for description.

As shown in FIG. 1, the seat 100 may be disposed in an intelligent cockpit of the automobile, and the seat 100 includes a cushion 110, a backrest 120, and a headrest 130. The cushion 110 is configured to support thighs and hips of a passenger. The backrest 120 is mounted at the rear of the cushion 110 and is configured to support a waist and a back of the passenger. The headrest 130 is mounted at an upper part of the backrest 120 and is configured to support a head and a neck of the passenger.

In some examples, the seat 100 further includes an adjustment base 150, and the cushion 110 is movably mounted on a floor of the automobile by using the adjustment base 150. For example, the cushion 110 may be lifted and/or moved forward or backward on the adjustment base 150, and the cushion 110 may further deflect relative to the adjustment base 150 to change a tilt angle of the cushion 110. In addition, softness and hardness of the cushion 110 can be further adjusted, to meet use requirements of different passengers. For example, the softness and hardness of the cushion 110 may be adjusted by changing an inflation volume of an airbag in the cushion 110.

In some examples, the backrest 120 is rotatably mounted at the rear of the cushion 110 (that is, on a side away from a leg rest 140), so that a tilt angle of the backrest 120 is adjustable. In addition, an airbag may be further disposed in the backrest 120, and softness and hardness of the backrest 120 may be adjusted by changing an inflation volume of the airbag.

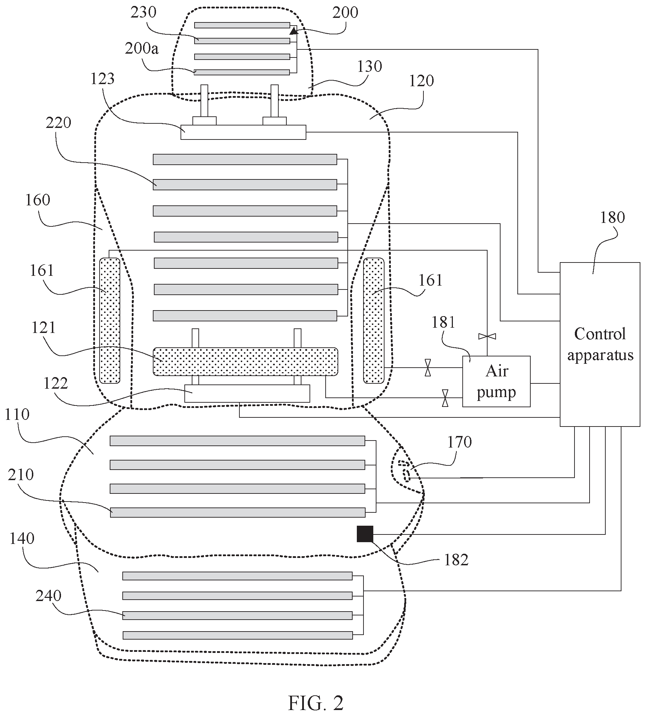

FIG. 2 is a diagram of an internal structure of the seat 100 according to an embodiment of this application. In some examples, as shown in FIG. 2, a lumbar support airbag 121 is disposed at a lower part of an inner side of the backrest 120. The lumbar support airbag 121 may be a support airbag that overlaps a waist region of the passenger, and a function of the lumbar support airbag 121 is to support an L3 vertebra of the passenger, to better fit a natural physiological curve of a human body to improve ride comfort. The lumbar support airbag 121 is disposed inside the backrest 120 in a liftable manner by using a lumbar support airbag height adjustment component 122. In this way, a height of the lumbar support airbag 121 may be adjusted by using the lumbar support airbag height adjustment component 122, so that waist support requirements of passengers with different heights can be met. For example, the lumbar support airbag height adjustment component 122 may include a power source like a motor, an electric motor, or a cylinder, and a transmission mechanism like a ball screw or a gear rack disposed between the power source and the lumbar support airbag 121. However, this is not limited.

In some examples, the seat 100 further includes an air pump 181. The lumbar support airbag 121 is connected to the air pump 181 through a pipeline. A solenoid valve is disposed on the pipeline, and turn-on and turn-off of the solenoid valve are controlled, to control the air pump 181 to inflate the lumbar support airbag 121 or deflate the lumbar support airbag 121. Changing an inflation volume of the lumbar support airbag 121 can change support strength (a support force) of the lumbar support airbag 121 for the passenger, to implement appropriate support for vertebrae of the passenger.

In some examples, the lumbar support airbag 121 includes a plurality of airbags successively disposed in a height direction. The plurality of airbags are separately connected to the air pump 181 through the pipeline, and can separately perform inflation and deflation control. In this case, waists of passengers with different heights can be accurately supported by inflating airbags at different heights without using the foregoing lumbar support airbag height adjustment component 122.

In some examples, in addition to the lumbar support airbag 121, a lumbar support of the seat 100 may exist in another form. To be specific, the lumbar support of the seat 100 may not include the lumbar support airbag, but includes another elastic or flexible support part. A specific existence form of the lumbar support is not specifically limited in this application.

In some examples, as shown in FIG. 2, a headrest height adjustment component 123 is further disposed in the backrest 120. The headrest height adjustment component 123 is configured to mount the headrest 130 at the upper part of the backrest 120 in a liftable manner. A height of the headrest 130 may be adjusted by using the headrest height adjustment component 123, to meet head support requirements of passengers with different sitting heights/heights. For example, the headrest height adjustment component 123 may include a power source like a motor, an electric motor, or a cylinder, and a transmission mechanism like a ball screw or a gear rack disposed between the power source and the headrest 130. However, this is not limited.

In some examples, one or more speakers (not shown in the figure) are further disposed in the headrest 130, to provide more personalized and comfortable listening experience for a passenger sitting on the seat 100, for example, implement functions such as an independent sound region, active noise reduction, or spatial sound replay. For example, one speaker is disposed on each of two sides of the headrest 130. In this way, the left ear and the right ear of the passenger each may listen to a sound from a speaker on an adjacent side.

In some examples, as shown in FIG. 1 and FIG. 2, the seat 100 further includes a leg rest 140 disposed on a front side of the cushion 110, and the leg rest 140 is configured to support shins of the passenger, to improve ride comfort. The leg rest 140 may be movably disposed at a front edge of the cushion 110. For example, the leg rest 140 may rotate and/or extend or retract relative to the cushion 110, and can be maintained at a plurality of different positions, to meet use requirements of different passengers. In addition, when the passenger does not need to use the leg rest 140, the leg rest 140 may be further stowed in a manner like folding.

In some examples, as shown in FIG. 1 and FIG. 2, the seat 100 further includes side wings 160 disposed on two sides of the backrest 120. The side wings 160 are configured to clamp the passenger and provide a lateral support force, so that ride comfort and safety of the passenger can be improved.

In some examples, a side wing airbag 161 is disposed in the side wing 160. The side wing airbag 161 is connected to the air pump 181 through a pipeline. A solenoid valve is disposed on the pipeline, and turn-on and turn-off of the solenoid valve are controlled, to control the air pump 181 to inflate the side wing airbag 161 or deflate the side wing airbag 161. Changing an inflation volume of the side wing airbag 161 can adjust a clamping degree and a lateral support force of the side wing 160 for the passenger, to maximally improve ride comfort of the passenger.

In some examples, the two side wing airbags 161 on the two sides of the backrest 120 are separately connected to the air pump 181. In this case, the two side wing airbags 161 may be separately controlled for inflation and deflation based on factors such as a sitting posture of the passenger and a traveling status (for example, a sharp turn) of a vehicle. For example, an inflation volume of one side wing airbag 161 may be increased, and an inflation volume of the other side wing airbag 161 may be kept unchanged.

In some examples, as shown in FIG. 1 and FIG. 2, the seat 100 further includes an adjustment mechanism 170 and a control apparatus 180. The control apparatus 180 may be disposed inside the seat, for example, disposed inside the adjustment base 150. The adjustment mechanism 170 is disposed on an outer wall of the adjustment base 150, to make it convenient for the passenger to operate the adjustment mechanism 170, so as to implement manual adjustment on the seat 100. The control apparatus 180 may be separately electrically connected to the foregoing controlled parts such as the lumbar support airbag height adjustment component 122, the headrest height adjustment component 123, the adjustment base 150, the air pump 181, the solenoid valve, and the adjustment mechanism 170 through harnesses. A user may output an adjustment instruction to the control apparatus 180 by using the adjustment mechanism 170, and the control apparatus 180 outputs a control instruction to a corresponding controlled part according to the adjustment instruction, to implement manual adjustment or control on the seat 100.

In some examples, the adjustment mechanism 170 may include a part that facilitates an operation of the user, for example, a button, a knob, a switch, a handle, or a touchscreen. The user may output an adjustment instruction to the control apparatus 180 by using the adjustment mechanism 170, and the control apparatus 180 outputs a control instruction to a corresponding controlled part according to the adjustment instruction, to manually adjust the seat 100 by using the controlled part.

For example, a position, a tilt angle, or the like of the cushion 110 may be adjusted. In this case, under an operation of the user on the adjustment mechanism 170, the control apparatus 180 receives an adjustment instruction from the adjustment mechanism 170, and then may increase or decrease a height of the cushion 110, move the seat forward (that is, in a traveling direction of the vehicle) or backward, or adjust softness and hardness of the cushion 110 by using the adjustment base 150. However, this is not limited.

In addition, the passenger may further adjust a tilt angle and/or softness and hardness of the backrest 120, a support position (height) and/or an inflation volume of the lumbar support airbag 121, a height of the headrest 130, an angle and/or an extension amount of the leg rest 140, an inflation volume of the side wing airbag 161, and the like by using the adjustment mechanism 170. However, this is not limited.

In some examples, the seat 100 may further include functional parts such as a seat heater, a seat ventilator, and a seat massager. All the foregoing functional parts may be in communication connection to the control apparatus 180 through harnesses. In this case, the passenger may further adjust or control the foregoing functional parts such as the seat heater, the seat ventilator, and the seat massager by operating the adjustment mechanism 170. For example, the passenger may turn on or turn off the seat heater by using the adjustment mechanism 170, or may adjust a gear or strength of the seat massager by using the adjustment mechanism 170.

In some examples, the control apparatus 180 may execute a corresponding program (software) by using a processor, to implement the foregoing functions and other functions. In addition, the functions may be alternatively implemented by using hardware such as a large-scale integration (large-scale integration, LSI) circuit or an application-specific integrated circuit (application-specific integrated circuit, ASIC), or may be implemented by using a combination of software and hardware.

For example, the control apparatus 180 may be a cockpit domain controller (cockpit domain controller, CDC), or may be any electronic control unit (electronic control unit, ECU) or microcontroller unit (microcontroller unit, MCU).

For example, in addition to manual adjustment on the seat 100 by using the adjustment mechanism 170, the seat 100 provided in this embodiment of this application further has an adaptive adjustment function. In this way, not only passenger safety can be ensured to a greater extent, but also development requirements of people for ride comfort, customization, and leisure of the seat in the future can be met.

Specifically, the seat 100 provided in this embodiment of this application further includes a plurality of sensors. The plurality of sensors are electrically connected to the control apparatus 180, and are configured to sense information such as a height, a weight, and a physique (for example, fat/thin) of the passenger. The control apparatus 180 is configured to automatically adjust the seat 100 to an optimal position based on the foregoing information, so that each part of the seat 100 can fully fit a corresponding part of a human body, to provide personalized comfortable experience for the passenger.

In some examples, the plurality of sensors include at least one of the following sensors: any sensor that can detect a physiological feature parameter or status of the passenger, for example, a pressure sensor, a distance sensor, a displacement sensor, an acceleration sensor (for example, a transverse acceleration sensor 182 in FIG. 2), a body temperature sensor, a heart rate sensor, or a humidity sensor. In addition, the plurality of sensors may further include an image sensor or a camera that can capture a passenger image.

In some examples, as shown in FIG. 2, the plurality of sensors include a plurality of pressure sensors 200. The plurality of pressure sensors 200 are arranged at different positions of the seat 100, and are configured to collect data of pressure applied by the passenger to the different positions of the seat 100. The control apparatus 180 can determine physiological feature parameters such as a sitting height, a height, a weight, and a physique (for example, fat/thin) of the passenger based on the pressure data, that is, perform passenger recognition based on the pressure data, and then perform adaptive adjustment on the seat 100 based on a recognition result.

As shown in FIG. 2, the plurality of pressure sensors 200 include a cushion pressure sensor 210, a backrest pressure sensor 220, a headrest pressure sensor 230, and a leg rest pressure sensor 240. Each sensor may be electrically connected to the control apparatus 180 through a wire (for example, a metal wire or a conductive fiber). The foregoing sensors may be, for example, pressure sensing pads.

The cushion pressure sensor 210 is disposed inside or on a surface of the cushion 110, and is configured to collect data of pressure applied by the passenger to a plurality of different positions of the cushion 110. The cushion pressure sensor 210 includes a plurality of detection units 200a arranged in an array at different positions of the cushion 110. The plurality of detection units 200a are configured to detect pressure borne at the different positions of the cushion 110 to obtain a plurality of pressure values, and send the plurality of detected pressure values to the control apparatus 180. The detection unit 200a of the cushion pressure sensor 210 may also be referred to as a cushion pressure detection unit.

The backrest pressure sensor 220 is disposed inside or on a surface of the backrest 120, and is configured to collect data of pressure applied by a back of the passenger to a plurality of different positions of the backrest 120. The backrest pressure sensor 220 includes a plurality of detection units 200a arranged in an array at different positions of the backrest 120. The plurality of detection units 200a are configured to detect pressure borne at the different positions of the backrest 120 to obtain a plurality of pressure values, and send the plurality of detected pressure values to the control apparatus 180. The detection unit 200a of the backrest pressure sensor 220 may also be referred to as a backrest pressure detection unit.

The headrest pressure sensor 230 is disposed inside or on a surface of the headrest 130, and is configured to collect data of pressure applied by a head of the passenger to a plurality of different positions of the headrest 130. The headrest pressure sensor 230 includes a plurality of detection units 200a arranged in an array at different positions of the headrest 130. The plurality of detection units 200a are configured to detect pressure borne at the different positions of the headrest 130 to obtain a plurality of pressure values, and send the plurality of detected pressure values to the control apparatus 180. The detection unit 200a of the headrest pressure sensor 230 may also be referred to as a headrest pressure detection unit.

The leg rest pressure sensor 240 is disposed inside or on a surface of the leg rest 140, and is configured to collect data of pressure applied by a shin of the passenger to a plurality of different positions of the leg rest 140. The leg rest pressure sensor 240 includes a plurality of detection units 200a arranged in an array at different positions of the leg rest 140. The plurality of detection units 200a are configured to detect pressure borne at the different positions of the leg rest 140 to obtain a plurality of pressure values, and send the plurality of detected pressure values to the control apparatus 180. The detection unit 200a of the leg rest pressure sensor 240 may also be referred to as a leg rest pressure detection unit.

For example, the cushion pressure sensor 210, the backrest pressure sensor 220, the headrest pressure sensor 230, and the leg rest pressure sensor 240 in this embodiment of this application each include a plurality of detection units 200a arranged in an array. The arrangement in an array herein may be arrangement in a form of a one-dimensional array, or may be arrangement in a form of a two-dimensional array. When the plurality of detection units 200a are arranged in a form of a one-dimensional array, an arrangement direction may be any direction like an up-down direction (a vertical direction), a horizontal direction (a left-right direction of the seat), or a front-rear direction (a forward/backward direction of the vehicle). This is not limited in this embodiment of this application.

In some examples, as shown in FIG. 2, the cushion pressure sensor 210 is disposed inside or on the surface of the cushion 110, the detection units 200a of the cushion pressure sensor 210 are disposed in a long strip structure extending in the horizontal direction (that is, the left-right direction of the seat), and the plurality of detection units 200a are arranged at intervals on an upper side surface of the cushion 110 in a form of a one-dimensional array in the front-rear direction of the cushion 110. In this case, the cushion pressure sensor 210 can collect pressure data of the cushion 110 at a plurality of different positions in the front-rear direction.

As shown in FIG. 2, the backrest pressure sensor 220 is disposed inside or on the surface of the backrest 120, the detection units 200a of the backrest pressure sensor 220 are disposed in a long strip structure extending in the horizontal direction, and the plurality of detection units 200a are arranged at intervals on a front side surface of the backrest 120 in a form of a one-dimensional array in the up-down direction. In this case, the backrest pressure sensor 220 can collect pressure data of the backrest 120 at a plurality of different positions in the up-down direction.

As shown in FIG. 2, the headrest pressure sensor 230 is disposed inside or on the surface of the headrest 130, the detection units 200a of the headrest pressure sensor 230 are disposed in a long strip structure extending in the horizontal direction, and the plurality of detection units 200a are arranged at intervals on a front side surface of the headrest 130 in a form of a one-dimensional array in the up-down direction. In this case, the headrest pressure sensor 230 can collect pressure data of the headrest 130 at a plurality of different positions in the up-down direction.

As shown in FIG. 2, the leg rest pressure sensor 240 is disposed inside or on the surface of the leg rest 140, the detection units 200a of the leg rest pressure sensor 240 are disposed in a long strip structure extending in the horizontal direction, and the plurality of detection units 200a are arranged at intervals on an upper side surface of the leg rest 140 in a form of a one-dimensional array in the front-rear direction of the leg rest 140. In this case, the leg rest pressure sensor 240 can collect pressure data of the leg rest 140 at a plurality of different positions in the front-rear direction.

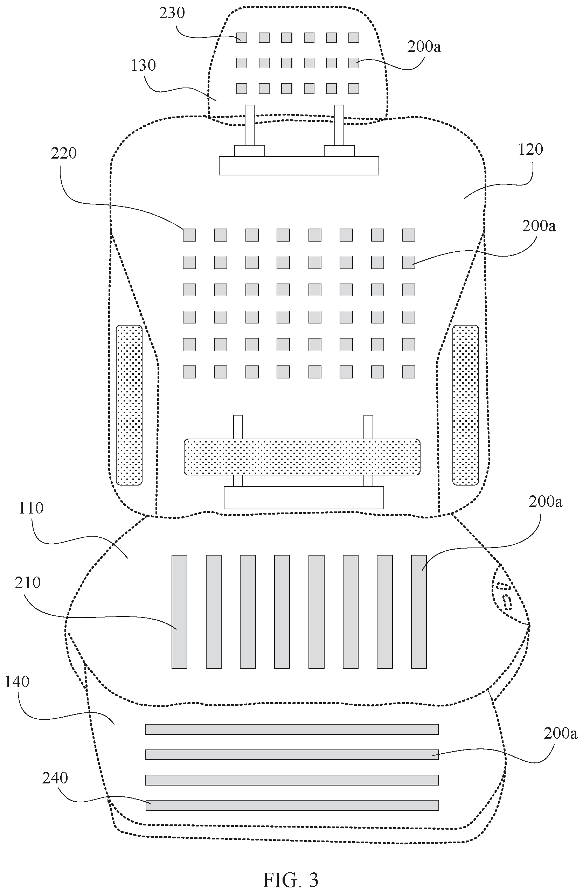

FIG. 3 is a diagram of installation of an example of the pressure sensor 200 according to an embodiment of this application. In some examples, as shown in FIG. 3, the cushion pressure sensor 210 is disposed on the cushion 110, the detection units 200a of the cushion pressure sensor 210 are disposed in a long strip structure extending in the front-rear direction, and the plurality of detection units 200a are arranged at intervals on an upper side surface of the cushion 110 in a form of a one-dimensional array in the horizontal direction of the cushion 110. In this case, the cushion pressure sensor 210 can collect pressure data of the cushion 110 at a plurality of different positions in the horizontal direction.

As shown in FIG. 3, the backrest pressure sensor 220 is disposed on the backrest 120, the plurality of detection units 200a of the backrest pressure sensor 220 are disposed in a rectangular block structure (or may be in another shape like a triangle, a trapezoid, or a circle), and the plurality of detection units 200a are arranged on a front side surface of the backrest 120 in a form of a two-dimensional array. In this case, the backrest pressure sensor 220 can collect pressure data of the backrest 120 at a plurality of positions on a two-dimensional plane (that is, the front side surface).

As shown in FIG. 3, the headrest pressure sensor 230 is disposed on the headrest 130, the plurality of detection units 200a of the headrest pressure sensor 230 are disposed in a rectangular block structure (or may be in another shape like a triangle, a trapezoid, or a circle), and the plurality of detection units 200a are arranged on a front side surface of the headrest 130 in a form of a two-dimensional array. In this case, the headrest pressure sensor 230 can collect pressure data of the headrest 130 at a plurality of positions on a two-dimensional plane (that is, the front side surface).

In some examples, the pressure sensor 200 (for example, the cushion pressure sensor 210, the backrest pressure sensor 220, the headrest pressure sensor 230, or the leg rest pressure sensor 240) may be a flexible pressure sensor, to meet both a ride comfort requirement and a pressure sensing requirement for the seat 100. For example, the pressure sensor 200 may be a resistive flexible pressure sensor or a capacitive flexible pressure sensor.

In some examples, the pressure sensor 200 is a capacitive flexible pressure sensor. The capacitive sensor has advantages such as high precision, low power consumption, quick response, a simple manufacturing process, and a good temperature resistance capability. An action mechanism of the capacitive sensor is to change a thickness of a dielectric layer by applying pressure, so that a capacitance of the dielectric layer changes. The change in the capacitance of the dielectric layer may be converted into a change in an electrical signal, and a magnitude of pressure is determined by using the electrical signal.

In some examples, the pressure sensor 200 may be formed by successively stacking a plurality of flexible functional film layers. In this case, the entire pressure sensor 200 may form a pressure sensing pad, and the plurality of detection units 200a are arranged on the pressure sensing pad in an array in a specific manner. The pressure sensor 200 may be disposed in a coating layer of the seat 100.

In some examples, as shown in FIG. 2 and FIG. 3, based on detection precision requirements of different body parts, parameters such as sizes (for example, widths and/or lengths), shapes, areas, disposing densities, quantities, and spacings of the detection units 200a of the cushion pressure sensor 210, the backrest pressure sensor 220, the headrest pressure sensor 230, and the leg rest pressure sensor 240 may be set differently, to reduce material costs of the sensors while meeting detection requirements.

For example, the disposing density of the detection units 200a of the headrest pressure sensor 230 is greater than that of another sensor, that is, a quantity of detection units 200a disposed in a unit area of the headrest 130 is the largest, so that a requirement for high-precision pressure detection on the head of the passenger can be met.

For another example, the quantity of detection units 200a of the leg rest pressure sensor 240 is less than that of another sensor, that is, a smallest quantity of detection units 200a are disposed on the leg rest 140, so that material costs of the sensor can be reduced while meeting a requirement for pressure detection on the leg of the user.

For example, as shown in FIG. 2, the headrest pressure sensor 230 includes 10 detection units 200a, that is, 10 detection units 200a are disposed on the headrest 130, each detection unit 200a is in a strip structure, a width of the strip structure is 1 centimeter (cm), and a spacing between adjacent detection units 200a is 0.5 cm. The cushion pressure sensor 210 and the backrest pressure sensor 220 each include 10 detection units 200a, that is, 10 detection units 200a are disposed on each of the cushion 110 and the backrest 120, each detection unit 200a is in a strip structure, a width of the strip structure is 2 cm, and a spacing between adjacent detection units 200a is 2 cm. The leg rest pressure sensor 240 includes six detection units 200a, that is, six detection units 200a are disposed on the leg rest 140, each detection unit 200a is in a strip structure, a width of the strip structure is 2 cm, and a spacing between adjacent detection units 200a is 1 cm.

After receiving pressure data collected by the cushion pressure sensor 210, the backrest pressure sensor 220, the headrest pressure sensor 230, and the leg rest pressure sensor 240, the control apparatus 180 can recognize physiological feature parameters such as a sitting height, a height, a weight, and a physique (for example, fat/thin) of the passenger based on the pressure data and position information of each detection unit 200a, and can adaptively adjust the seat 100 based on the physiological feature parameters.

In some examples, the adaptive adjustment herein may include, for example, at least one of the following adjustments:

adjusting a height of the headrest 130, adjusting a height of the lumbar support airbag 121, adjusting an inflation volume of the lumbar support airbag 121, adjusting an inflation volume of the side wing airbag 161, adjusting a height, a front-rear position, a tilt angle, or softness and hardness of the cushion 110, adjusting a speaker in the headrest 130, adjusting a tilt angle or softness and hardness of the backrest 120, adjusting a tilt angle or an extension amount of the leg rest 140, and the like.

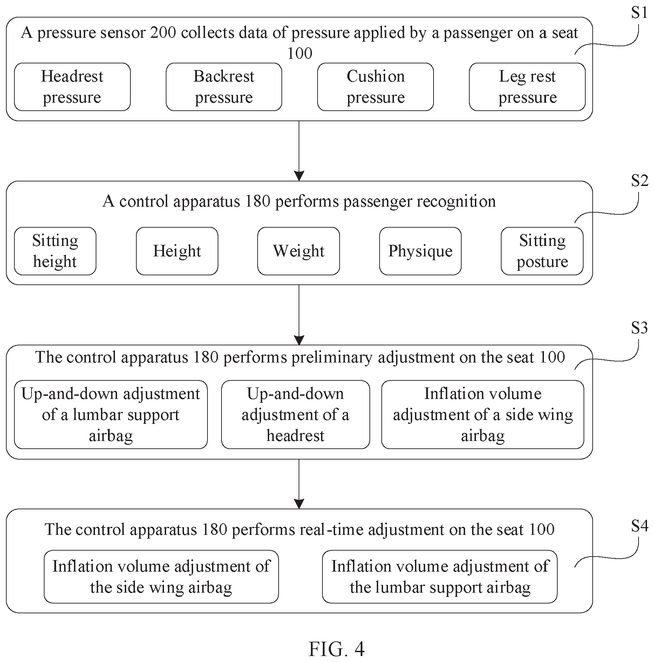

Based on the foregoing hardware, the following further describes an adaptive adjustment procedure of the seat 100 with reference to the accompanying drawings. FIG. 4 is a diagram of an adaptive adjustment procedure of the seat 100 according to an embodiment of this application. As shown in FIG. 4, the seat 100 may perform adaptive adjustment according to the following procedure.

**Step S1:** The pressure sensor 200 collects data of pressure applied by a passenger to different positions of the seat 100, and sends the pressure data to the control apparatus 180.

For example, the pressure data may include pressure data at different positions of the headrest 130 that is collected by the headrest pressure sensor 230, pressure data at different positions of the backrest 120 that is collected by the backrest pressure sensor 220, pressure data at different positions of the cushion 110 that is collected by the cushion pressure sensor 210, and pressure data at different positions of the leg rest 140 that is collected by the leg rest pressure sensor 240.

**Step S2:** The control apparatus 180 performs passenger recognition based on the obtained pressure data and position information of the detection unit 200a, that is, performs algorithm processing such as filtering and feature extraction on the pressure data collected by the pressure sensor 200, to obtain physiological feature parameters such as a sitting height, a height, a weight, and a physique (for example, thin, normal, fat, or overweight) of the passenger, and may further recognize information such as a current sitting posture of the passenger.

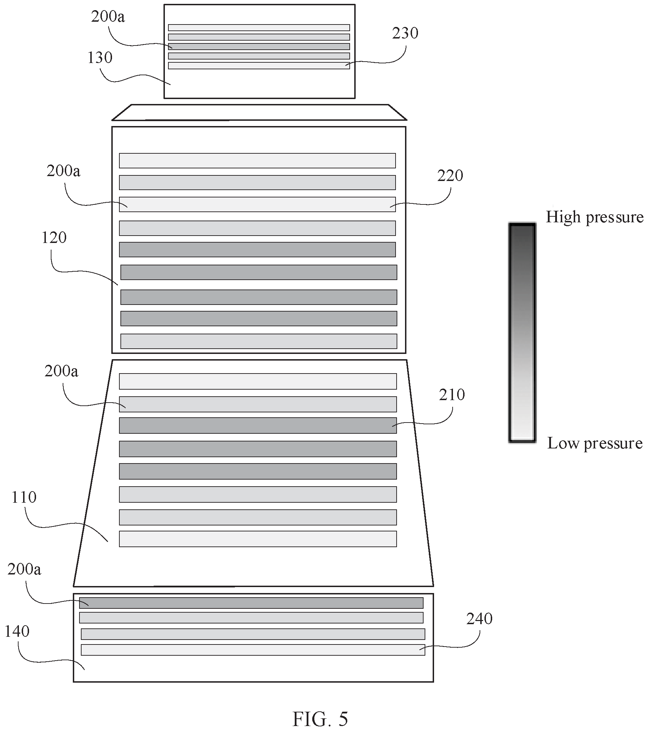

For example, the pressure data obtained by the control apparatus 180 is a pressure value detected by each detection unit 200a, and the control apparatus 180 stores position information of each detection unit 200a. In this way, the control apparatus 180 may draw a pressure distribution image shown in FIG. 5 based on the pressure value detected by the detection unit 200a and position information of the detection unit 200a.

FIG. 5 is a pressure distribution image drawn based on data of pressure applied by a passenger to different positions of the seat 100. In FIG. 5, a deeper grayscale of a detection unit 200a indicates a larger pressure value detected by the detection unit 200a, and a shallower grayscale of a detection unit 200a indicates a smaller pressure value detected by the detection unit 200a. The control apparatus 180 can obtain physiological feature parameters such as a sitting height, a height, a weight, and a physique (for example, thin, normal, fat, or overweight) of the passenger based on the pressure distribution image and with reference to a preset algorithm (the algorithm may be determined based on a size feature of a human bone, a structural feature of the seat 100, and the like), and may further recognize a current sitting posture of the passenger, and adaptively adjust the seat 100 accordingly.

In some examples, the control apparatus 180 may determine the sitting height of the passenger based on pressure data at different positions of the headrest 130 that are collected by the plurality of detection units 200a of the headrest pressure sensor 230. For example, a pressure centroid position (for example, a centroid height) on the headrest 130 may be obtained through calculation based on the pressure data. The pressure centroid position is a position corresponding to an opisthocranion (a point that is on an occipital bone and that is most convex toward the rear) of the passenger, and the position of the opisthocranion is usually in a linear relationship with the sitting height. Therefore, the sitting height of the passenger may be predicted based on the pressure centroid position and with reference to a preset empirical formula.

In some examples, the control apparatus 180 may determine the height of the passenger based on the pressure data at different positions of the headrest 130 that is collected by the headrest pressure sensor 230 and the pressure data at different positions of the leg rest 140 that is collected by the leg rest pressure sensor 240.

For example, a pressure centroid position on the leg rest 140 may be obtained through calculation based on data of pressure borne by the leg rest 140, and the pressure centroid position is a position corresponding to a gastrocnemius center of a shin of the passenger. A distance d1 between a knee of the passenger and the gastrocnemius center is usually in a linear relationship with a leg length, and the distance d1 is in a linear relationship with a distance d2 between an edge that is of the leg rest 140 and that is adjacent to the cushion 110 and the pressure centroid position (for example, it may be considered that the two distances are approximately equal). Therefore, the leg length of the passenger may be predicted based on the pressure centroid position on the leg rest 140 and with reference to a preset empirical formula. After obtaining the sitting height and the leg length of the passenger, the control apparatus 180 may obtain the height of the passenger by adding the sitting height and the leg length.

In some examples, the control apparatus 180 may perform an operation like summation on the pressure data collected by the cushion pressure sensor 210, the backrest pressure sensor 220, the headrest pressure sensor 230, and the leg rest pressure sensor 240, to obtain the weight of the passenger.

In some examples, the control apparatus 180 may calculate a pressure centroid position of the passenger for a surface of the cushion 110 based on pressure data at different positions of the cushion 110 that are collected by the plurality of detection units 200a of the cushion pressure sensor 210. In addition, a weight calculation procedure is performed only when a pressure centroid is located in a rear half part of the cushion 110 (that is, a part adjacent to the backrest 120). If the pressure centroid is located in a front half part of the cushion 110, because the passenger may not completely sit on the seat 100 in this case, a calculation result in this case may be inaccurate, and therefore the weight is not calculated.

For example, after the foregoing determining condition is met, the control apparatus 180 may perform summation on pressure values obtained by detection units 200a located at all positions (such as the headrest, the backrest, the cushion, and the leg rest) of the seat, to obtain the weight of the user. A formula is as follows:

$$W = \sum_{i=1}^{m} F_i$$

W is the weight of the passenger, $i$ is a number of the detection unit 200a, $F_i$ is a pressure value detected by an $i^{th}$ detection unit 200a, and $m$ is a total quantity of detection units. For example, the total quantity herein includes a total quantity of detection units 200a of the cushion pressure sensor 210, the backrest pressure sensor 220, the headrest pressure sensor 230, and the leg rest pressure sensor 240.

In some examples, to improve accuracy of weight calculation, a related interference factor may be further considered. Before summation is performed on the pressure values obtained by the detection units 200a, a pressure value obtained by each detection unit 200a may be divided by a coefficient used for calibration. The coefficient may be related to an area of each detection unit 200a, or may be a preset constant fitted by using experimental data. A formula is as follows:

$$W = \sum_{i=1}^{m} \frac{F_i}{c_i}$$

W is the weight of the passenger, $i$ is a number of the detection unit 200a, $F_i$ is a pressure value detected by an $i^{th}$ detection unit 200a, $c_i$ is a correction coefficient of the $i^{th}$ detection unit 200a, and $m$ is a total quantity of detection units 200a. For example, the total quantity herein includes a total quantity of detection units 200a of the cushion pressure sensor 210, the backrest pressure sensor 220, the headrest pressure sensor 230, and the leg rest pressure sensor 240.

In some examples, considering that a seat adjustment (movement or doing work) process may affect weight calculation, the foregoing factor may be further considered, to improve accuracy of weight calculation. Based on a sum of the pressure values that is calculated by using the foregoing calculation method, a weighted sum of current values of all motors of the seat may be further added, to obtain a final weight value of the user. A formula is as follows:

$$W = \sum_{i=1}^{m} \frac{F_i}{c_i} + \sum_{j=1}^{n} \frac{I_j}{d_j}$$

W is the weight of the passenger, $i$ is a number of the detection unit 200a, $F_i$ is a pressure value detected by an $i^{th}$ detection unit 200a, $c_i$ is a correction coefficient of the $i^{th}$ detection unit 200a, $m$ is a total quantity of detection units 200a, $j$ is a number of a seat motor, $I_j$ is a current value of a $j^{th}$ seat motor, $d_j$ is a correction coefficient of the $j^{th}$ seat motor, and $n$ is a total quantity of seat motors.

In some examples, the control apparatus 180 may determine the physique of the passenger based on the height and the weight of the passenger that are obtained in the foregoing steps. The physique may include, for example, thin, normal, fat, or overweight. In addition, the physique may further include a back width of the passenger, and the control apparatus 180 may determine the back width of the passenger based on the pressure data collected by the backrest pressure sensor 220.

In some examples, the control apparatus 180 may determine the sitting posture of the passenger based on the pressure data collected by the backrest pressure sensor 220. For example, a degree of attachment between the back of the passenger and the backrest 120 is determined, or whether the sitting posture of the passenger is tilted toward one side of the seat 100 is determined.

In some examples, the control apparatus 180 may determine the back width and/or the sitting posture of the passenger based on a distribution image of pressure that is applied by the passenger on the backrest 120 and that is collected by the backrest pressure sensor 220.

<u>Step S3:</u> The control apparatus 180 performs preliminary adaptive adjustment on the seat 100 based on a recognition result in step S2.

Among a plurality of adjustable parts of the seat 100, the headrest 130, the lumbar support airbag 121, and the side wing airbag 161 are parts that are clearly felt by the passenger and have great impact on comfort. Therefore, the preliminary adaptive adjustment herein mainly includes up-and-down adjustment of the headrest 130, up-and-down adjustment of the lumbar support airbag 121, and inflation volume adjustment of the side wing airbag 161.

In some examples, the control apparatus 180 may perform up-and-down adjustment on the headrest 130 based on the pressure data at different positions of the headrest 130 that is collected by the headrest pressure sensor 230.

For example, the control apparatus 180 may first obtain the pressure centroid position on the headrest 130 through calculation based on the pressure data, and then adjust the height of the headrest 130 based on the pressure centroid position, so that the pressure centroid position can overlap a target centroid position on the headrest 130, thereby achieving optimal comfort and safety of the headrest 130. The target centroid position may be, for example, a physical center of the headrest. In addition, the physical center of the headrest may not be a position that can maximize passenger comfort. For example, a shape of the headrest is irregular or the passenger has a special preference. Therefore, in this embodiment of this application, the target centroid position may be alternatively manually set by the passenger based on the preference of the passenger, or may be determined by the control apparatus 180 based on a pressure centroid position recorded in a ride history of the passenger.

For example, when the pressure centroid position obtained through calculation is higher than the target centroid position, it indicates that a position of the headrest 130 is too low, and the neck and the shoulder are prone to discomfort due to extrusion of the headrest 130. In this case, the control apparatus 180 may control the headrest height adjustment component 123 to move, to raise the headrest 130, that is, perform an action of raising the headrest 130.

When the pressure centroid position obtained through calculation is lower than the target centroid position, it indicates that a position of the headrest 130 is too high, the neck is suspended and lacks support, and muscles at the shoulder and the neck are tense and uncomfortable. In this case, the control apparatus 180 may control the headrest height adjustment component 123 to move, to lower the headrest 130, that is, perform an action of lowering the headrest 130.

When the pressure centroid position obtained through calculation overlaps or is very close to the target centroid position (for example, a distance is less than a preset distance threshold), it indicates that current comfort and safety of the headrest 130 reach a high level. In this case, the control apparatus 180 does not need to adjust a position of the headrest 130.

In some examples, the control apparatus 180 may perform up-and-down adjustment on the lumbar support airbag 121 based on the sitting height of the passenger obtained through calculation in step S2.

For example, there is a linear relationship between a position of an L3 vertebra and the sitting height. Therefore, the control apparatus 180 may determine the position of the L3 vertebra of the passenger based on the sitting height of the passenger, and control, by using the lumbar support airbag height adjustment component 122, the lumbar support airbag 121 to move up and down, so that a height of the lumbar support airbag 121 is aligned with the position of the L3 vertebra of the passenger (that is, a waist position). In other words, regardless of the height of the passenger, this application can ensure accuracy of a support position of the lumbar support airbag 121.

In some examples, for a seat 100 without the lumbar support airbag height adjustment component 122, lumbar support airbags 121 located at different heights may be inflated and/or deflated to accurately support waists of passengers with different heights.

In some examples, the control apparatus 180 may determine an inflation volume of the side wing airbag 161 based on the physique of the passenger obtained through calculation in step S2. For example, a wider back of the passenger indicates a smaller initial inflation volume of the side wing airbag 161, so that transverse space of the seat 100 can be increased and a clamping force on the passenger can be reduced. A narrower back of the passenger indicates a larger initial inflation volume of the side wing airbag 161, so that transverse space of the seat 100 can be reduced to implement reliable clamping on the passenger and provide a sufficient lateral support force.

**Step S4:** The control apparatus 180 adjusts the seat 100 in real time based on the pressure data collected by the cushion pressure sensor 210, the backrest pressure sensor 220, the headrest pressure sensor 230, and the leg rest pressure sensor 240. For example, in a traveling process of the vehicle, inflation volumes of the lumbar support airbag 121 and the side wing airbag 161 are adjusted.

In some examples, with reference to FIG. 2 and FIG. 4, the seat 100 further includes a transverse acceleration sensor 182 electrically connected to the control apparatus 180. The transverse acceleration sensor 182 is configured to collect transverse acceleration information of the vehicle and report the transverse acceleration information to the control apparatus 180. The control apparatus 180 may adjust the inflation volume of the side wing airbag 161 based on the transverse acceleration information.

For example, when a transverse acceleration of the vehicle reaches or exceeds an acceleration threshold, a direction of the acceleration is determined, and a side wing airbag 161 on an opposite side starts to be inflated. For example, if the direction of the acceleration is to the left, the control apparatus 180 controls an air pump and a valve connected to a side wing airbag 161 on a right side, to inflate the side wing airbag 161 on the right side. If the direction of the acceleration is to the right, the control apparatus 180 controls an air pump and a valve connected to a side wing airbag 161 on a left side, to inflate the side wing airbag 161 on the left side.

Through the foregoing setting, in the traveling process of the vehicle, inflation volumes of the side wing airbags 161 on the left side and the right side can be dynamically adjusted, to provide better lateral support for the passenger when the vehicle has a relatively large lateral acceleration, thereby improving ride comfort. For example, when the vehicle is turning, an inflation volume of a side wing airbag 161 located outside a turning radius should be increased accordingly to provide a centripetal force required by the passenger for turning, so that the passenger does not need to exert a muscle force.

In some examples, a pressure sensor (not shown in the figure) may also be disposed on the side wing airbag 161. For example, a plurality of detection units 200a described above may also be disposed on a surface of the side wing airbag 161. In this way, when to stop inflation of the side wing airbag 161 may be determined by calculating a sum of pressure on a plurality of detection units 200a on a surface of a side wing airbag 161 on an opposite side. For example, inflation of the side wing airbag 161 is stopped when the sum of the pressure meets the following mathematical relationship:

$$\mathrm{F}_{total} = m * a_{lat} - C$$

$F_{total}$ is the sum of the pressure on the plurality of detection units 200a on the surface of the side wing airbag 161 on the opposite side, $m$ is a user mass converted from the user weight obtained in step S2, $a_{lat}$ is the transverse acceleration of the vehicle obtained by the transverse acceleration sensor 182, and $C$ is a preset constant. For example, a specific value of $C$ may be determined based on a value of static friction between the passenger and the seat.

In some examples, when the transverse acceleration of the vehicle is restored to a level lower than the acceleration threshold, the control apparatus 180 controls an air pump and an air valve that are connected to the side wing airbag 161 on the opposite side, to restore (deflate) an inflation volume of the side wing airbag 161 to a status before this step is performed.

In some examples, the control apparatus 180 may adjust the inflation volume of the side wing airbag 161 based on the pressure data at different positions of the backrest 120 that is collected by the backrest pressure sensor 220.

For example, the control apparatus 180 may determine, based on the pressure data, that the sitting posture of the passenger is in an asymmetric state for a long time, for example, determine that the sitting posture of the passenger tilts toward a left side of the seat 100 for a long time. In this case, the control apparatus 180 may separately perform an inflation operation on a side wing airbag 161 on the left side, to correct the sitting posture of the passenger and avoid discomfort caused by an inappropriate sitting posture. When determining that the sitting posture of the passenger tilts toward a right side of the seat 100 for a long time, the control apparatus 180 may separately perform an inflation operation on a side wing airbag 161 on the right side, to correct the sitting posture of the passenger.

In some examples, the control apparatus 180 may adjust the inflation volume of the lumbar support airbag 121 based on the pressure data at different positions of the backrest 120 that is collected by the backrest pressure sensor 220.

For example, when the passenger applies relatively high pressure on the backrest 120, the lumbar support airbag 121 needs a larger inflation volume to maintain a shape of the lumbar support airbag 121, to implement appropriate support for the L3 vertebra of the passenger. When the passenger applies relatively low pressure on the backrest 120, the inflation volume of the lumbar support airbag 121 needs to be reduced accordingly, to avoid an excessive lumbar lordosis of the passenger caused by an excessively large support force.

In some examples, the control apparatus 180 may further adjust the inflation volume of the lumbar support airbag 121 based on a tilt angle of the backrest 120.

For example, a lumbar lordosis degree of a human body changes with a sitting posture of the human body. As the backrest 120 is gradually laid down (and the tilt angle gradually increases), a lumbar lordosis angle (lumbar lordosis angle) gradually increases. Therefore, the inflation volume of the lumbar support airbag 121 may be adjusted based on different backrest tilt angles, to ensure consistency and comfort of waist support for the passenger in different sitting postures.

Based on the seat 100 provided in FIG. 1 to FIG. 5, with reference to the seat adjustment method provided in embodiments of this application, the following continues to specifically analyze and resolve the technical problem proposed in this application.

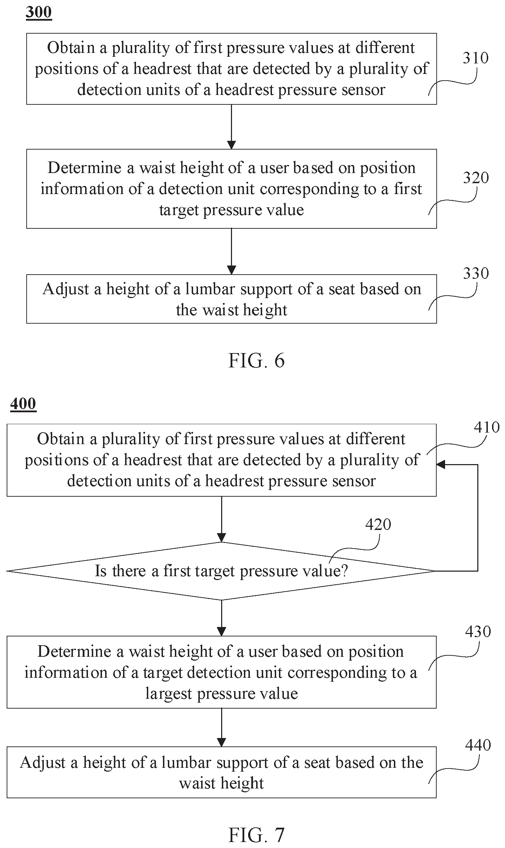

FIG. 6 is a schematic flowchart of a seat adjustment method 300 according to an embodiment of this application. The adjustment method 300 may be applied to the seat 100 provided in the foregoing embodiments, or may be applied to a controller, a processor, or a chip in the seat 100. The adjustment method 300 may be performed by a seat adjustment apparatus, for example, performed by the control apparatus 180 in the seat 100. As shown in FIG. 6, the adjustment method 300 may include the following step 310, step 320, and step 330.

Step 310: The adjustment apparatus obtains a plurality of first pressure values at different positions of a headrest that are detected by a plurality of detection units of a headrest pressure sensor, where the plurality of first pressure values include at least one first target pressure value greater than a first threshold.

Step 320: The adjustment apparatus determines a waist height of a user based on position information of a detection unit corresponding to the first target pressure value.

Step 330: The adjustment apparatus adjusts a height of a lumbar support of a seat based on the waist height.

The detection unit of the headrest pressure sensor may also be referred to as a headrest pressure detection unit. Based on this, the adjustment method 300 may also be understood or expressed as follows:

The adjustment apparatus obtains a plurality of first pressure values detected by a plurality of headrest pressure detection units, where the plurality of first pressure values include at least one first target pressure value greater than a first threshold; the adjustment apparatus determines a waist height of a user based on position information of a headrest pressure detection unit corresponding to the first target pressure value; and the adjustment apparatus adjusts a height of a lumbar support of a seat based on the waist height.

The seat adjustment method 300 provided in this embodiment of this application is implemented based on the headrest having the headrest pressure sensor with the plurality of detection units. The plurality of detection units may be arranged in an array at different positions of the headrest, so that pressure borne at a plurality of different positions of the headrest can be detected, and the plurality of first pressure values can be obtained. After obtaining the plurality of first pressure values, the adjustment apparatus determines that the plurality of first pressure values include the first target pressure value greater than the preset first threshold. This indicates that the headrest bears external pressure. In other words, it can be determined that the user sits on the seat and rests the head on the headrest.

A position of the detection unit corresponding to the first target pressure value is a pressure bearing position of the headrest, that is, a rest position of the back of the head of the user. Therefore, the position may be equivalent to a position of the back of the head of the user. It can be learned based on a skeleton model of a human body and a structural feature of the seat that there is a linear relationship between a waist height of the human body and a height of the back of the head. Therefore, the adjustment apparatus may determine the waist height of the user based on the position information of the detection unit corresponding to the first target pressure value and according to a preset empirical formula, algorithm, or the like. Then, the adjustment apparatus may adjust the height of the lumbar support of the seat based on the determined waist height, so that the height of the lumbar support can match the waist height of the user, thereby providing personalized support requirements for users with different heights.

According to the seat adjustment method 300 provided in this embodiment of this application, the height of the lumbar support can be adaptively adjusted based on the waist height of the user, so that a requirement for real-time and dynamic adjustment of the lumbar support of the seat can be met. In addition, the lumbar support can be further adjusted with high accuracy and high precision, and appropriate waist support can be provided for users with different heights, so that ride comfort of the seat can be improved.

In some examples, the first threshold may be a relatively small value slightly greater than zero, and a purpose of setting the first threshold is to avoid false reporting of borne pressure caused by factors such as signal fluctuation and interference. Specifically, when the headrest does not bear external pressure, a detected value of the detection unit may not be zero due to factors such as signal fluctuation, interference, and a weight of a surface of the headrest. In some embodiments of this application, these cases can be excluded by setting the preset first threshold, to avoid that the head of the user is mistakenly considered to be rested on the headrest in a case that there is no person.

In some examples, compared with the foregoing first threshold related to false reporting of borne pressure, the first threshold may alternatively be a relatively large value. Increasing the first threshold can more accurately determine the pressure bearing position of the headrest (that is, the position of the back of the head of the user), in other words, help determine a main pressure bearing position of the headrest. In this way, the waist height of the user can be more accurately determined. This helps improve precision and accuracy of lumbar support adjustment, and improve ride comfort of the seat.

In some examples, the adjustment apparatus obtains the plurality of first pressure values detected by the plurality of detection units of the headrest pressure sensor. The plurality of detection units may be in one-to-one correspondence with the plurality of first pressure values, or at least one of the detection units may correspond to a plurality of (for example, two, three, or more) first pressure values. This is not limited in this embodiment of this application.

In some examples, there may be one or more first target pressure values greater than the first threshold in the plurality of first pressure values. When there is one first target pressure value, the waist height of the user may be determined based on position information of a detection unit corresponding to the unique target pressure value. When there are a plurality of first target pressure values, the waist height of the user may be determined based on position information of detection units corresponding to one or more or all of the plurality of first target pressure values.

In some examples, determining the waist height of the user based on the position information of the detection unit corresponding to the first target pressure value may be determining the waist height of the user based on height information of the detection unit corresponding to the first target pressure value (that is, the position information includes the height information); or may be determining the waist height of the user based on height information and horizontal position information of the detection unit corresponding to the first target pressure value (that is, the position information includes the height information and the horizontal position information). This is not specially limited in this embodiment of this application.

In some examples, the position information of the detection unit corresponding to the first target pressure value may be input into a neural network model, and data analysis is performed by using the neural network model to determine the waist height of the user. The neural network model is obtained through model training based on historical data (training data) and a deep learning algorithm. The neural network model may be, for example, a convolutional neural network (convolutional neural network, CNN) model, and the deep learning algorithm may be, for example, a machine learning (machine learning) algorithm or a meta learning (meta Learning) algorithm.

In some examples, that the adjustment apparatus determines the waist height of the user may be determining a height of an L3 vertebra of the user. However, this is not limited.

In some examples, the lumbar support may include one or more lumbar support airbags; or the lumbar support may not include a lumbar support airbag. In this case, the lumbar support may alternatively exist in another form, for example, may include another elastic or flexible support part. A specific existence form of the lumbar support is not specially limited in this application.

In some examples, adjusting the height of the lumbar support of the seat based on the determined waist height may be raising or lowering the lumbar support, so that the height of the lumbar support matches the waist height of the user. For example, the lumbar support is made opposite to a waist of the user, so that the lumbar support can provide appropriate and accurate waist support for the user, thereby improving ride comfort.

For example, the waist height may be used as a target height of the lumbar support. If a current height of the lumbar support is lower than the target height, the lumbar support may be raised until the height of the lumbar support reaches the target height. If a current height of the lumbar support is higher than the target height, the lumbar support may be lowered until the height of the lumbar support reaches the target height.

In some examples, the seat includes a lumbar support adjustment component, and the lumbar support adjustment component is in transmission connection to the lumbar support, and can drive the lumbar support to move up and down to change the height of the lumbar support. Based on this, in the foregoing step 330, that the adjustment apparatus adjusts the height of the lumbar support of the seat includes: The adjustment apparatus controls the lumbar support adjustment component, to adjust the height of the lumbar support.

In some examples, the lumbar support includes a plurality of lumbar support airbags successively disposed in a height direction. Based on this, in the foregoing step 330, that the adjustment apparatus adjusts the height of the lumbar support of the seat includes: performing an inflation operation and/or a deflation operation on the plurality of lumbar support airbags, to adjust the height of the lumbar support.

For example, if the determined waist height is higher than a current lumbar support height, an uninflated lumbar support airbag at a higher position may be inflated to raise the lumbar support. Optionally, an inflated lumbar support airbag at a current lowest position may be further deflated, to ensure that a support area of the lumbar support remains unchanged. If the determined waist height is lower than a current lumbar support height, an inflated lumbar support airbag at a highest position may be deflated to lower the lumbar support. Optionally, an uninflated lumbar support airbag at a current lower position may be further inflated, to ensure that a support area of the lumbar support remains unchanged.

In some examples, the lumbar support includes two lumbar support airbags successively disposed in the height direction. The lumbar support airbags located at different heights may be inflated and/or deflated to accurately support waists of users with different heights. For example, if the waist height of the user determined by the adjustment apparatus is greater than a first height threshold, an upper lumbar support airbag is inflated; if the waist height is less than the first height threshold but greater than a second height threshold, both upper and lower lumbar support airbags are inflated; or if the waist height is less than the second height threshold, the lower lumbar support airbag is inflated.

Refer to FIG. 7. FIG. 7 is a schematic flowchart of a seat adjustment method 400 according to an embodiment of this application. The adjustment method 400 may be considered as a specific implementation of the foregoing adjustment method 300, and step 430 may be considered as a sub-step of the foregoing step 320. The adjustment method 400 may include the following step 410 to step 440.

Step 410: An adjustment apparatus obtains a plurality of first pressure values detected by a headrest pressure sensor in a current period, where the headrest pressure sensor includes a plurality of detection units arranged in an array at different positions of a headrest. In other words, the adjustment apparatus obtains a plurality of first pressure values borne at a plurality of different positions of the headrest. The detection unit of the headrest pressure sensor may also be referred to as a headrest pressure detection unit.

Step 420: The adjustment apparatus determines whether a first target pressure value greater than a first threshold exists in the plurality of first pressure values.

For example, that the adjustment apparatus determines whether the first target pressure value greater than the preset first threshold exists may be specifically determining whether a detection unit whose signal (for example, a current value) change exceeds a threshold exists. If the detection unit does not exist, step 410 is performed again. The adjustment apparatus may continue to obtain a plurality of first pressure values from the headrest pressure sensor that are detected in a next period, and perform the foregoing step of comparison with the first threshold (that is, step 420) again. If the detection unit exists, step 430 is performed.

Step 430: When the plurality of first pressure values include a plurality of first target pressure values, the adjustment apparatus determines a waist height of a user based on position information of a target detection unit corresponding to a largest pressure value in the plurality of first target pressure values (that is, a largest value in the plurality of first pressure values).

Step 440: The adjustment apparatus adjusts a height of a lumbar support of a seat based on the waist height.

As a most convex point on the back of the head, an opisthocranion (opisthocranion) applies a largest extrusion force on the headrest. Therefore, a position of the target detection unit corresponding to the largest pressure value may be equivalent to an opisthocranion position of the user. It can be learned based on a skeleton model of a human body and a structural feature of the seat that a height of the opisthocranion is usually in a linear relationship with the waist height of the user. Therefore, the waist height of the user may be further determined based on the opisthocranion position. In fact, as an intermediate variable, the opisthocranion position may not be reflected in a calculation process. Based on the foregoing processing logic, the adjustment apparatus may directly determine the waist height of the user based on the position information of the target detection unit corresponding to the largest pressure value and according to a preset empirical parameter, an empirical formula, a preset algorithm or model (for example, an AI model), or the like. Compared with the foregoing embodiment, in this embodiment, the waist height of the user is determined by using the position information of the target detection unit, so that accuracy and precision of waist height detection can be improved, thereby helping improve accuracy and precision of lumbar support adjustment and improve ride comfort of the seat.

In some examples, determining the waist height of the user based on the position information of the target detection unit may be determining the waist height of the user based on height information of the target detection unit (that is, the position information includes the height information); or may be determining the waist height of the user based on height information and horizontal position information of the target detection unit (that is, the position information includes the height information and the horizontal position information). This is not specially limited in this embodiment of this application.

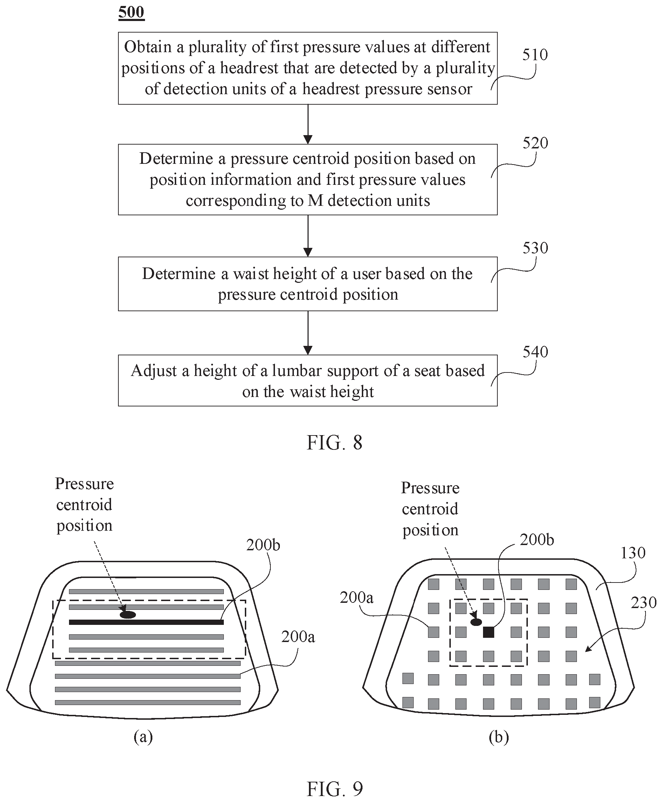

Refer to FIG. 8. FIG. 8 is a schematic flowchart of a seat adjustment method 500 according to an embodiment of this application. The adjustment method 500 may include the following step 510 to step 540. The adjustment method 500 may be considered as a specific implementation of the foregoing adjustment method 300 and adjustment method 400, and step 520 and step 530 may be considered as sub-steps of the foregoing step 320 and step 430. For step 510 and step 540, respectively refer to the descriptions of step 310 and step 330 in the foregoing embodiment. Different parts are mainly described herein.

Step 510: An adjustment apparatus obtains a plurality of first pressure values at different positions of a headrest that are detected by a plurality of detection units of a headrest pressure sensor, where the plurality of first pressure values include a plurality of first target pressure values greater than a first threshold.

Step 520: The adjustment apparatus determines (calculates) a pressure centroid position based on position information and obtained pressure values corresponding to M detection units, where the M detection units include a target detection unit and M-1 detection units arranged in a preset range around the target detection unit, M is an integer greater than or equal to 2, and the foregoing largest pressure value is detected by the target detection unit.

Step 530: The adjustment apparatus determines a waist height based on the pressure centroid position.

Step 540: The adjustment apparatus adjusts a height of a lumbar support of a seat based on the waist height.

The detection unit of the headrest pressure sensor may also be referred to as a headrest pressure detection unit. Based on this, the adjustment method 500 may also be understood or expressed as follows:

The adjustment apparatus obtains a plurality of first pressure values detected by a plurality of headrest pressure detection units, where the plurality of first pressure values include a plurality of first target pressure values greater than a first threshold; the adjustment apparatus determines a pressure centroid position based on position information and first pressure values corresponding to M headrest pressure detection units, where the M headrest pressure detection units include a target detection unit and M-1 headrest pressure detection units located in a preset range around the target detection unit, M≥2, and the target detection unit is a detection unit corresponding to a largest pressure value; and the adjustment apparatus adjusts a height of a lumbar support of a seat based on a waist height.

The adjustment apparatus obtains the plurality of first pressure values detected by the plurality of detection units. The target detection unit corresponding to the largest pressure value is closest to an opisthocranion position of the user, but it cannot be ensured that a position of the target detection unit definitely overlaps the opisthocranion position of the user. For example, the opisthocranion position of the user may be located between two adjacent detection units. Therefore, in this embodiment of this application, the pressure centroid position is first calculated based on the largest pressure value and at least one first pressure value in a preset range around the largest pressure value, and then the pressure centroid position may be equivalent to the opisthocranion position of the user, so that the determined opisthocranion position can be more accurate. Compared with directly equating the position of the target detection unit with the opisthocranion position of the user, in this embodiment, the pressure centroid position is calculated and the pressure centroid position is equivalent to the opisthocranion position of the user, so that accuracy and precision of waist height detection can be improved, thereby helping improve accuracy and precision of lumbar support adjustment and improve ride comfort of the seat.

A centroid is a short term for a center of mass, and means an imaginary point on which mass is considered to be concentrated in a physical system. Therefore, the pressure centroid position herein may also be understood or expressed as a pressure center position. Pressure of a user body on a part (for example, the headrest) of the seat may be considered to be concentrated on an imaginary point herein. A method for calculating the pressure centroid position may be implemented by using a centroid calculation formula.

In some examples, for a headrest pressure sensor in which a plurality of detection units are arranged at intervals in a height direction in a one-dimensional manner, a pressure centroid position may be calculated according to the following formula:

$$d = \frac{\sum p_i * d_i}{\sum p_i}$$

$d$ represents the pressure centroid position (for example, a height), $p$ represents a first pressure value detected by a detection unit, $d$ represents a position of the detection unit (for example, a distance from an origin), and a subscript $i$

represents any one of the foregoing M detection units, or represents a number of the detection unit.

In some examples, for a headrest pressure sensor in which a plurality of detection units are arranged at intervals in a two-dimensional manner, a pressure centroid position may be calculated according to the following formula:

$$R = \frac{\sum p_i * r_i}{\sum p_i}$$

R represents a pressure centroid position vector, $p$ represents a first pressure value detected by a detection unit, **r** represents a position vector of the detection unit, and a subscript $i$ represents any one of the foregoing M detection units, or represents a number of the detection unit.

In some examples, if there are a plurality of peak values in the plurality of first pressure values obtained by the adjustment apparatus, and a ratio of at least one peak value other than the largest pressure value to the largest pressure value is greater than a preset coefficient (the preset coefficient may be 0.5 to 0.95, for example, may be 0.8, 0.85, or 0.9), in this case, in addition to the foregoing largest pressure value, the M pressure values should further include the at least one peak value that meets the condition.

In other words, the foregoing preset range is variable, and a specific value of M is also variable. Logic for determining the preset range may be preset. After it is determined that the at least one peak value that meets the condition exists, the preset range may be determined based on a distribution status of a detection unit corresponding to the at least one peak value, and the pressure centroid position is calculated by using position information and an obtained pressure value of a detection unit in the preset range. Through the foregoing setting, accuracy and precision of waist height detection can be further improved. This helps improve accuracy and precision of lumbar support adjustment and improve ride comfort of the seat.

In some examples, to remove noise data of a non-contact region, in a process of calculating the pressure centroid position, the adjustment apparatus may select data in only a specific region around the largest pressure value to participate in centroid calculation, thereby improving accuracy of the centroid position. A specific data selection manner (that is, the foregoing manner of determining the preset range) is shown as follows:

First, all peak values in the first pressure values are determined, and a peak value whose pressure value is greater than or equal to the largest pressure value * a preset coefficient (the preset coefficient may be 0.5 to 0.95, for example, may be 0.8, 0.85, or 0.9) is selected.

If there is only one peak value that meets the condition, the peak value (that is, the largest pressure value) and N adjacent values before and after the peak value are selected for pressure centroid calculation in the foregoing formula. N is a positive integer, for example, may be 1 or 2. In this case, M=2N+1.

If there are a plurality of peak values that meet the condition, all values from an $N^{th}$ unit before a $1^{st}$ peak position to an $N^{th}$ unit after a last peak position are selected for pressure centroid calculation in the foregoing formula. N is a positive integer, for example, may be 1 or 2. In this case, M>2N+2.

FIG. 9 is a diagram of distribution of pressure centroid positions corresponding to different types of headrest pressure sensors. As shown in part (a) in FIG. 9, a headrest pressure sensor 230 may be a one-dimensional pressure sensor, that is, a plurality of detection units 200a are arranged at intervals on a front surface of a headrest 130 in a height direction in a one-dimensional manner. A largest pressure value is detected by a target detection unit 200b. A dashed-line box around the target detection unit 200b represents the foregoing preset range, that is, the preset range is a one-dimensional range. In this case, a pressure centroid position may be calculated based on position information and obtained pressure values of the target detection unit 200b and three upper and lower detection units 200a. The pressure centroid position obtained through calculation may be shown by an elliptic black dot in the figure. In this case, the waist height of the user may be determined based on the pressure centroid position, and it can be ensured that the obtained waist height has higher accuracy.

As shown in part (b) in FIG. 9, a pressure sensor may be a two-dimensional pressure sensor, that is, a plurality of detection units 200a are arranged in an array on a front surface of a headrest 130 in a two-dimensional manner. A largest pressure value is detected by a target detection unit 200b. A dashed-line box around the target detection unit 200b represents the foregoing preset range, that is, the preset range is a two-dimensional range. In this case, a pressure centroid position may be calculated based on position information and obtained pressure values of the target detection unit 200b and eight surrounding detection units 200a. The pressure centroid position obtained through calculation may be shown by an elliptic black dot in the figure. The pressure centroid position does not overlap a position of the target detection unit 200b, but is adjacent to an arrangement position of the target detection unit 200b. In this case, the waist height of the user may be determined based on the pressure centroid position, and it can be ensured that the obtained waist height has higher accuracy.

In some examples, that the adjustment apparatus determines the waist height of the user based on the pressure centroid position in step 530 may specifically include: The adjustment apparatus determines a sitting height of the user based on the pressure centroid position; and the adjustment apparatus determines the waist height of the user based on the sitting height.

An opisthocranion height of the user is in a linear relationship with the sitting height, and the sitting height is in a linear relationship with the waist height. Therefore, the sitting height of the user may be first determined based on the pressure centroid position, and then the waist height of the user is determined based on the sitting height. Through the foregoing setting, accuracy and precision of waist height detection can be improved. This can improve accuracy and precision of lumbar support adjustment and improve ride comfort of the seat.

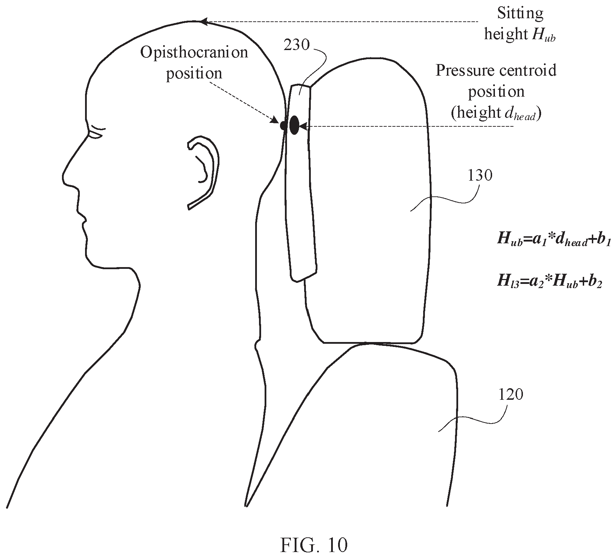

FIG. 10 is a diagram of a principle of determining a waist height of a user based on a pressure centroid position of a headrest. As shown in FIG. 10, because the pressure centroid position corresponds to an opisthocranion position of a user, the pressure centroid position may be equivalent to the opisthocranion position of the user. A sitting height and the opisthocranion position are in a linear relationship. Therefore, the sitting height of the user may be obtained through calculation according to the following formula:

$$H_{ub} = a_1 * d_{head} + b_1$$

$H_{ub}$ represents the sitting height, $d_{head}$ represents the pressure centroid position (height), and $a_1$ and $b_1$ each are a coefficient that describes a linear relationship between an opisthocranion height and the sitting height. Test subjects may be tested to obtain a large amount of test data, where the test data includes sitting heights and height values of pressure centroids that are in correspondence; and then the foregoing formula is obtained in a linear fitting manner based on the test data. An advantage of calculating the sitting height by using the foregoing formula is that the method is simple and easy to implement, and a calculation result is accurate, that is, the sitting height of the user can be accurately determined.

As shown in FIG. 10, because the sitting height and the waist height are in a linear relationship, the waist height of the user may be obtained through calculation according to the following formula:

$$H_{l3} = a_2 * H_{ub} + b_2$$

$H_{l3}$ is the waist height of the user (for example, may be a height of an L3 vertebra), and is also a target height expected to be obtained after lumbar support adjustment, $H_{ub}$ is the sitting height of the user obtained in the previous step, and $a_2$ and $b_2$ each are a coefficient that describes a linear relationship between the waist height and the sitting height.

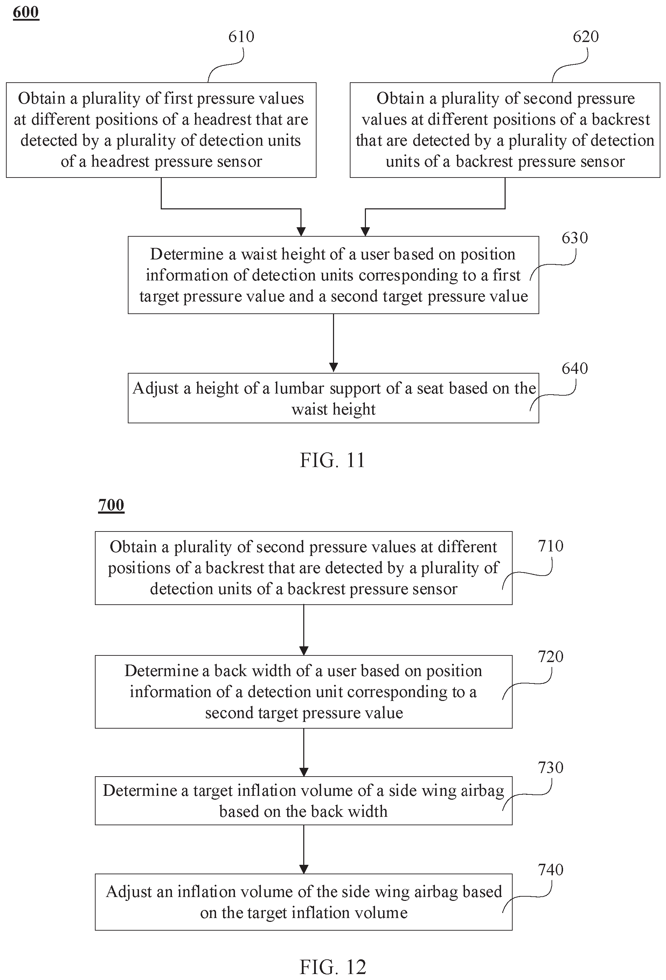

Refer to FIG. 11. FIG. 11 is a schematic flowchart of a seat adjustment method 600 according to an embodiment of this application. The adjustment method 600 may include the following step 610 to step 640. The adjustment method 600 may be considered as a specific implementation of the foregoing adjustment method 300, and step 630 may be considered as a sub-step of the foregoing step 320. For step 610 and step 640, respectively refer to the descriptions of step 310 and step 330 in the foregoing embodiment. Different parts are mainly described herein.

Step 610: An adjustment apparatus obtains a plurality of first pressure values at different positions of a headrest that are detected by a plurality of detection units of a headrest pressure sensor, where the plurality of first pressure values include at least one first target pressure value greater than a first threshold.

Step 620: The adjustment apparatus obtains a plurality of second pressure values at different positions of a backrest that are detected by a plurality of detection units of a backrest pressure sensor, where the plurality of second pressure values include at least one second target pressure value greater than a second threshold.

Step 630: The adjustment apparatus determines a waist height of a user based on position information of detection units corresponding to the first target pressure value and the second target pressure value.

Step 640: The adjustment apparatus adjusts a height of a lumbar support of a seat based on the waist height.

The detection unit of the headrest pressure sensor may also be referred to as a headrest pressure detection unit, and the detection unit of the backrest pressure sensor may also be referred to as a backrest pressure detection unit. Based on this, the adjustment method 600 may also be understood or expressed as follows:

The adjustment apparatus obtains a plurality of first pressure values detected by a plurality of headrest pressure detection units, where the plurality of first pressure values include a plurality of first target pressure values greater than a first threshold; the adjustment apparatus obtains a plurality of second pressure values detected by a plurality of backrest pressure detection units, where the plurality of second pressure values include at least one second target pressure value greater than a second threshold; the adjustment apparatus determines a waist height based on position information of a headrest pressure detection unit corresponding to the first target pressure value and position information of a backrest pressure detection unit corresponding to the second target pressure value; and the adjustment apparatus adjusts a height of a lumbar support of a seat based on the waist height.

A sitting posture difference affects a contact position between the back of the head and the headrest. For example, a bent upper body has a lower contact position between the head of the user and the headrest than a straight upper body. In other words, a sitting posture affects a linear relationship between a height of the back of the head and the waist height. Based on this, the adjustment method 600 provided in this embodiment of this application further considers impact of the sitting posture on a waist height calculation result. The adjustment apparatus may further obtain the plurality of second pressure values at the different positions of the backrest that are detected by the plurality of detection units of the backrest pressure sensor. A position of the detection unit corresponding to the second target pressure value greater than the preset second threshold can represent the sitting posture of the user. Therefore, the waist height of the user may be determined jointly based on the position information of the detection units corresponding to the first target pressure value and the second target pressure value. In this way, the waist height obtained through calculation is more accurate. This helps improve accuracy and precision of lumbar support adjustment and improve ride comfort of the seat.

In some examples, the plurality of detection units of the backrest pressure sensor may be arranged in an array at the different positions of the backrest, so that pressure borne at the plurality of different positions of the backrest can be detected and the plurality of second pressure values can be obtained. Herein, for ease of differentiation and understanding, a pressure value detected by the detection unit of the headrest pressure sensor is expressed as the first pressure value, and a pressure value greater than the first threshold in the first pressure values is expressed as the first target pressure value; and a pressure value detected by the detection unit of the backrest pressure sensor is expressed as the second pressure value, and a pressure value greater than the second threshold in the second pressure values is expressed as the second target pressure value. There is no requirement on a sequence of performing step 610 and step 620. For example, step 610 may be performed before step 620; or step 620 may be performed before step 610; or the two steps are performed simultaneously.

In some examples, similar to the first threshold, the second threshold may be a relatively small value slightly greater than zero, and a purpose of setting the second threshold is to avoid false reporting of borne pressure caused by factors such as signal fluctuation and interference. Specifically, when the backrest does not bear external pressure, a detected value of the detection unit may not be zero due to factors such as signal fluctuation, interference, and a weight of a surface of the backrest. In some embodiments of this application, these cases can be excluded by setting the preset second threshold, to avoid that the back of the user is mistakenly considered to be attached to the backrest in a case that there is no person. The first threshold may be equal to or different from the second threshold. For example, the first threshold may be greater than, equal to, or less than the second threshold. This is not specially limited in this embodiment of this application.

In some examples, compared with the foregoing second threshold related to false reporting of borne pressure, the second threshold may alternatively be a relatively large value. Increasing the second threshold can more accurately determine the pressure bearing position of the backrest (that is, the position of the back of the user), in other words, help determine a main pressure bearing position of the backrest. In this way, the sitting posture and the waist height of the user can be more accurately determined. This helps improve precision and accuracy of lumbar support adjustment, and improve ride comfort of the seat.

In some examples, the adjustment apparatus obtains the plurality of second pressure values detected by the plurality of detection units of the backrest pressure sensor. The plurality of detection units may be in one-to-one correspondence with the plurality of second pressure values, or at least one of the detection units may correspond to a plurality of (for example, two, three, or more) second pressure values. This is not limited in this embodiment of this application.

In some examples, there may be one or more second target pressure values greater than the second threshold in the plurality of second pressure values. When there is one second target pressure value, the waist height of the user may be determined based on position information of a detection unit corresponding to the unique target pressure value. When there are a plurality of second target pressure values, the waist height of the user may be determined based on position information of detection units corresponding to one or more or all of the plurality of second target pressure values.

In some examples, with reference to the adjustment method 400 shown in FIG. 7, in this embodiment of this application, that the adjustment apparatus determines the waist height of the user based on the position information of the detection units corresponding to the first target pressure value and the second target pressure value may be as follows:

The adjustment apparatus determines the waist height of the user based on position information of detection units corresponding to a largest pressure value in the first target pressure value and the second target pressure value.

Alternatively, the adjustment apparatus determines the waist height of the user based on position information of detection units corresponding to a largest pressure value in the first target pressure value and a largest pressure value in the second target pressure value (that is, a largest value in the plurality of second pressure values).

Alternatively, the adjustment apparatus determines the waist height of the user based on position information of a detection unit corresponding to a largest pressure value in the first target pressure value and a centroid position of pressure applied by the user on the backrest. For a method for calculating the pressure centroid position on the backrest, refer to the method for calculating the pressure centroid position on the headrest provided in the foregoing adjustment method 500. Details are not described herein.

In some examples, with reference to the adjustment method 500 shown in FIG. 8, in this embodiment of this application, that the adjustment apparatus determines the waist height of the user based on the position information of the detection units corresponding to the first target pressure value and the second target pressure value may alternatively be as follows:

The adjustment apparatus determines the waist height of the user based on a centroid position of pressure applied by the user on the headrest and the position information of the detection unit corresponding to the second target pressure value.

Alternatively, the adjustment apparatus determines the waist height of the user based on a centroid position of pressure applied by the user on the headrest and position information of a detection unit corresponding to a largest pressure value in the second target pressure value.

Alternatively, the adjustment apparatus determines the waist height of the user based on a centroid position of pressure applied by the user on the headrest and a centroid position of pressure applied by the user on the backrest.

In some examples, in this embodiment of this application, that the adjustment apparatus determines the waist height of the user based on the position information of the detection units corresponding to the first target pressure value and the second target pressure value may alternatively be as follows:

The adjustment apparatus determines a sitting height of the user based on the position information of the detection units corresponding to the first target pressure value and the second target pressure value.

The adjustment apparatus determines the waist height of the user based on the sitting height.

For example, with reference to the foregoing related content in FIG. 10, that the adjustment apparatus determines the sitting height of the user based on the position information of the detection units corresponding to the first target pressure value and the second target pressure value may be specifically performed according to the following formula:

$$H_{ub} = a_1 * (d_{head} + f(p_{back}, S_{back}, d_{back})) + b_1$$

$H_{ub}$ represents the sitting height, $d_{head}$ represents the pressure centroid position (height), $a_1$ and $b_1$ each are a coefficient that describes a linear relationship between an opisthocranion height and the sitting height, $p_{back}$ is a sum of pressure values on a surface of the backrest, $S_{back}$ is a pressure area on the surface of the backrest, and $d_{back}$ is a pressure centroid position on the surface of the backrest.

It is easy to understand that $f(p_{back}, S_{back}, d_{back})$ in the foregoing formula represents a correction amount for an opisthocranion position by a sitting posture determining result of the user, and is not a mandatory term. The function may be a linear function, and the coefficient is determined by fitting an experimental result. Alternatively, the function may be a machine learning model trained by using experimental data.

FIG. 12 is a schematic flowchart of a seat adjustment method 700 according to an embodiment of this application. The adjustment method 700 may be applied to the seat 100 provided in the foregoing embodiments, or may be applied to a controller, a processor, or a chip in the seat 100. The adjustment method 700 may be performed by a seat adjustment apparatus, for example, performed by the control apparatus 180 in the seat 100. As shown in FIG. 12, the adjustment method 700 may include the following step 710, step 720, step 730, and step 740.

Step 710: The adjustment apparatus obtains a plurality of second pressure values at different positions of a backrest that are detected by a plurality of detection units of a backrest pressure sensor, where the plurality of second pressure values include a plurality of second target pressure values greater than a second threshold.

Step 720: The adjustment apparatus determines a back width of a user based on position information of detection units corresponding to the second target pressure values.

Step 730: The adjustment apparatus determines a target inflation volume of a side wing airbag of a seat based on the back width, where the back width is negatively correlated with the target inflation volume.

Step 740: The adjustment apparatus adjusts an inflation volume of the side wing airbag based on the target inflation volume.

The detection unit of the backrest pressure sensor may also be referred to as a backrest pressure detection unit. Based on this, the adjustment method 700 may also be understood or expressed as follows:

The adjustment apparatus obtains a plurality of second pressure values detected by a plurality of backrest pressure detection units, where the plurality of second pressure values include at least one second target pressure value greater than a second threshold; the adjustment apparatus determines a back width of a user based on position information of a backrest pressure detection unit corresponding to the second target pressure value; the adjustment apparatus determines a target inflation volume of a side wing airbag of a seat based on the back width, where the back width is negatively correlated with the target inflation volume; and the adjustment apparatus adjusts an inflation volume of the side wing airbag based on the target inflation volume.

The seat adjustment method 700 provided in this embodiment of this application is implemented based on the backrest having the backrest pressure sensor with the plurality of detection units. The plurality of detection units may be arranged in an array at different positions of the backrest, so that pressure borne at a plurality of different positions of the backrest can be detected, and the plurality of second pressure values can be obtained.

A position of the detection unit corresponding to the second target pressure value greater than the second threshold in the plurality of second pressure values is a pressure bearing position of the backrest, a pressure bearing region including a plurality of detection units corresponding to a plurality of second target pressure values corresponds to a back region of the user, and a distance between detection units on left and right edges corresponds to the back width of the user. Therefore, the back width of the user may be determined based on the position information of the detection unit corresponding to the second target pressure value, and the target inflation volume of the side wing airbag is determined based on the back width. The back width is negatively correlated with the target inflation volume of the side wing airbag. In other words, a wider back of the user indicates a smaller target inflation volume of the side wing airbag, and a narrower back of the user indicates a larger target inflation volume of the side wing airbag. Then, the adjustment apparatus may adjust the inflation volume of the side wing airbag based on the target inflation volume, for example, enable the inflation volume of the side wing airbag to reach the target inflation volume.

In some embodiments of this application, through the foregoing setting, adaptive adjustment of the inflation volume of the side wing airbag may be implemented based on the back width of the user, so that the inflation volume of the side wing airbag matches the back width of the user. For example, a wider back of the user indicates a smaller target inflation volume of the side wing airbag, so that transverse space of the seat can be increased and a clamping force on the user can be reduced. A narrower back of the user indicates a larger target inflation volume of the side wing airbag, so that transverse space of the seat can be reduced to implement reliable clamping on the user and provide a sufficient lateral support force. In this application, personalized ride requirements can be provided for users with different physiques, and ride comfort and safety of the user can be improved.

In some examples, similar to the foregoing first threshold or the second threshold in the adjustment method 600, the second threshold in this embodiment of this application may be a relatively small value slightly greater than zero, and a purpose of setting the second threshold is to avoid false reporting of borne pressure caused by factors such as signal fluctuation and interference. Specifically, when the backrest does not bear external pressure, a detected value of the detection unit may not be zero due to factors such as signal fluctuation, interference, and a weight of a surface of the backrest. In some embodiments of this application, these cases can be excluded by setting the preset second threshold, to avoid that the back of the user is mistakenly considered to be attached to the backrest in a case that there is no person. The first threshold may be equal to or different from the second threshold. For example, the first threshold may be greater than, equal to, or less than the second threshold. This is not specially limited in this embodiment of this application.

In some examples, compared with the foregoing second threshold related to false reporting of borne pressure, the second threshold may alternatively be a relatively large value. Increasing the second threshold can more accurately determine the pressure bearing region of the backrest. In this way, the back width of the user can be more accurately determined. This helps implement precise adjustment of the inflation volume of the side wing airbag, so that ride comfort and safety of the passenger can be further improved.

For example, considering that a difference between acting forces applied by users with different weights on the backrest may be relatively large, in this embodiment of this application, the second threshold may be alternatively determined based on a largest pressure value in the second target pressure values (that is, a largest pressure value in the plurality of second pressure values). For example, the second threshold may be equal to the largest pressure value * a preset coefficient (for example, may be 0.1, 0.2, 0.3, 0.4, or 0.5). In this way, there may be different second thresholds for users with different weights, so that back widths of the users with different weights can be accurately detected.

Based on the foregoing, the second target pressure value may be alternatively determined in the following manner:

The adjustment apparatus obtains the plurality of second pressure values at the different positions of the backrest that are detected by the plurality of detection units of the backrest pressure sensor, and performs normalization processing; and the adjustment apparatus determines, as the second target pressure value, a second pressure value corresponding to a value that is greater than the preset coefficient after the normalization processing.

In some examples, that the adjustment apparatus determines the target inflation volume of the side wing airbag based on the back width may be:

The adjustment apparatus determines the target inflation volume of the side wing airbag based on the back width and a preset mapping relationship. The mapping relationship indicates a correspondence between different back widths and different target inflation volumes, and the back width is negatively correlated with the target inflation volume.

In other words, the adjustment apparatus may determine target inflation volumes of side wing airbags on left and right sides based on the preset mapping relationship. The mapping relationship is preferably a negative correlation, that is, a wider physique of the passenger indicates a smaller target inflation volume of the side wing airbag. A specific value in the mapping relationship may be obtained by fitting experimental data. After determining a value of the target inflation volume, the adjustment apparatus controls air pumps and valves that are connected to the side wing airbags on the left and right sides, to adjust inflation volumes of the side wing airbags to the target inflation volumes.

In some examples, the target inflation volume may be an initial inflation volume. To be specific, the adjustment method 700 may be applied to a scenario in which the user just sits on the seat. In this case, the adjustment apparatus may determine, according to the adjustment method 700, initial inflation volumes of the side wing airbags on the left and right sides, and then adjust the inflation volumes of the side wing airbags based on the initial inflation volumes, so that the user has high ride comfort and safety.

In some examples, that the adjustment apparatus adjusts the inflation volume of the side wing airbag based on the target inflation volume may be specifically:

if the target inflation volume is greater than a current inflation volume of the side wing airbag, performing an inflation operation on the side wing airbag until the inflation volume of the airbag reaches the target inflation volume; or if the target inflation volume is less than a current inflation volume of the side wing airbag, performing a deflation operation on the side wing airbag until the inflation volume of the airbag reaches the target inflation volume.

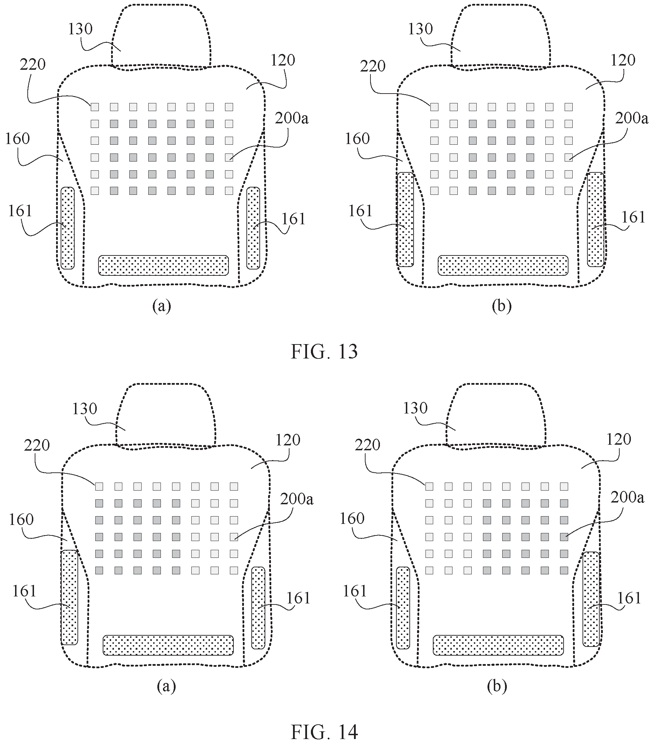

FIG. 13 is a diagram of a principle of detecting a back width of a user by using a backrest pressure sensor. As shown in FIG. 13, a plurality of detection units 200a of a backrest pressure sensor 220 are arranged at intervals on a front side surface of a backrest 120 in a manner of a two-dimensional array. The plurality of detection units 200a detect pressure borne at different positions of the backrest 120 to obtain a plurality of second pressure values. The plurality of second pressure values include a plurality of second target pressure values greater than a second threshold. Detection units 200a corresponding to the second target pressure values are represented by gray squares in the figure.

A distance between detection units 200a on left and right edges corresponds to the back width of the user. For example, the distance may be in a linear relationship with the back width of the user, or the distance is equal to or approximately equal to the back width of the user. Therefore, the back width of the user may be determined based on position information of the detection units corresponding to the second target pressure values, and the inflation volume of the side wing airbag of the seat is adjusted based on the back width.

As shown in part (a) in FIG. 13, a distance between detection units 200a on left and right edges is relatively wide, indicating that a back of a current user is also relatively wide. Therefore, side wing airbags 161 on left and right sides have relatively small target inflation volumes. In this case, volumes of the side wing airbags 161 are relatively small, so that transverse space of the seat can be increased and a clamping force on the user can be reduced.

As shown in part (b) in FIG. 13, a distance between detection units 200a on left and right edges is relatively narrow, indicating that a back of a current user is also relatively narrow. Therefore, side wing airbags 161 on left and right sides have relatively large target inflation volumes. In this case, volumes of the side wing airbags 161 are relatively large, so that transverse space of the seat can be reduced to implement reliable clamping on the user and provide a sufficient lateral support force.

In some examples, the adjustment apparatus may determine, based on second pressure values obtained in a plurality of consecutive periods, whether a sitting posture of the user is in an asymmetric state for a long time (that is, duration of a plurality of periods). If it is determined that the sitting posture of the user is in the asymmetric state for a long time, the adjustment apparatus further determines a specific side of the seat toward which the sitting posture of the user tilts, and performs an inflation operation on a side wing airbag on the side, to correct the sitting posture of the user.

For example, if it is determined that the sitting posture of the user is in the asymmetric state for a long time and tilts toward a left side of the seat, the adjustment apparatus may separately perform an inflation operation on a side wing airbag on the left side, to correct the sitting posture of the passenger. If it is determined that the sitting posture of the user is in the asymmetric state for a long time and tilts toward a right side of the seat, the adjustment apparatus may separately perform an inflation operation on a side wing airbag on the right side, to correct the sitting posture of the passenger, and avoid discomfort caused by an inappropriate sitting posture.

In some examples, the sitting posture of the user may be specifically corrected according to the following steps.

Step ①: The adjustment apparatus obtains a plurality of second pressure values at different positions of the backrest in a current period that are detected by the plurality of detection units of the backrest pressure sensor, where the plurality of second pressure values include at least one second target pressure value greater than the second threshold.

Step ②: The adjustment apparatus determines, based on position information of a detection unit corresponding to the second target pressure value, whether the sitting posture of the user is in an asymmetric state in the current period.

Step ③: If it is determined that the sitting posture of the user is in the asymmetric state in M consecutive periods, the adjustment apparatus determines a tilt direction of the user based on position information of a detection unit corresponding to a second target pressure value in a last period (that is, an $M^{th}$ period), where M is a positive integer greater than or equal to 2.

Step ④: The adjustment apparatus performs an inflation operation on a side wing airbag located in the tilt direction.

For example, after the user sits on the seat, the adjustment apparatus may periodically obtain a plurality of second pressure values detected by the backrest pressure sensor, and analyze, based on second pressure values obtained in each period, asymmetry of pressure applied by the user on the backrest of the seat in a current period. By way of example and not limitation, asymmetry of body pressure on the backrest in each period may be calculated according to the following formula:

$$X = \sum_{i=1}^{m} |F_i - F_i{}'|$$

X is a value representing the asymmetry of the body pressure of the user, $m$ is a total quantity of detection units on one side of a central axis of the seat, $i$ is a number of a detection unit, $F_i$ is a pressure reading of the $i^{th}$ detection unit, and $F_i{}'$ is a pressure reading of a detection unit that is symmetrically distributed with the $i^{th}$ detection unit on the seat.

When the body pressure asymmetry value X exceeds a preset asymmetry threshold and duration of this case exceeds preset duration, that is, when body pressure asymmetry values X obtained through calculation in M consecutive periods all exceed the asymmetry threshold, the adjustment apparatus compares sums of pressure readings on the left and right sides of the backrest based on second pressure values obtained in the last period, and controls a corresponding air valve and air pump to inflate a side wing airbag on a side with higher body pressure of the user.

In some examples, a pressure centroid position on the backrest in each period may also be obtained through calculation, and the foregoing body pressure asymmetry and/or the specific side toward which the sitting posture tilts are/is determined based on the pressure centroid position.

FIG. 14 is a diagram of a principle of detecting a sitting posture of a user by using a backrest pressure sensor. As shown in FIG. 14, for example, if it is determined, based on a calculation result of the foregoing formula, that the sitting posture of the user is in the asymmetric state within duration of M consecutive periods, a specific side of the seat toward which the sitting posture of the user tilts may be determined based on a second target pressure value obtained in an $M^{th}$ period. As shown in part (a) in FIG. 14, detection units 200a corresponding to a plurality of second target pressure values are mainly distributed on the left side of the backrest 120. Accordingly, it may be determined that the sitting posture of the user tilts toward the left side of the seat. In this case, the adjustment apparatus may separately perform an inflation operation on a side wing airbag 161 on the left side, so that the side wing airbag 161 on the left side has a larger volume, and then the sitting posture of the passenger can be corrected. As shown in part (b) in FIG. 14, detection units 200a corresponding to a plurality of second target pressure values are mainly distributed on the right side of the backrest 120. Accordingly, it may be determined that the sitting posture of the user tilts toward the right side of the seat. In this case, the adjustment apparatus may separately perform an inflation operation on a side wing airbag 161 on the right side, so that the side wing airbag 161 on the right side has a larger volume, and then the sitting posture of the passenger can be corrected.

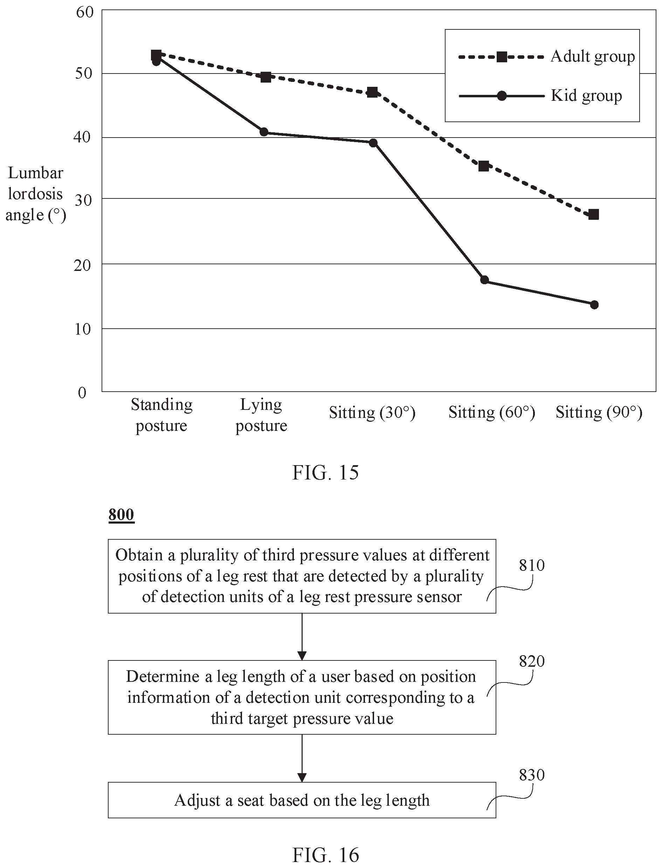

When the user applies relatively high pressure on the backrest of the seat, the lumbar support airbag needs a larger inflation volume to maintain a shape of the lumbar support airbag, to implement appropriate support for the waist of the user. When the user applies relatively low pressure on the backrest of the seat, the inflation volume of the lumbar support airbag needs to be reduced accordingly, to avoid an excessive lumbar lordosis of the user caused by an excessively large support force. In addition, the sitting posture of the user also affects an optimal inflation volume of the lumbar support airbag. FIG. 15 is a diagram of a correspondence between a lumbar lordosis angle and a posture of a human body. As shown in FIG. 15, a lumbar lordosis degree of a human body changes with a sitting posture of the human body. As a backrest angle is gradually laid down, a lumbar lordosis angle gradually increases. Therefore, the inflation volume of the lumbar support airbag needs to be adjusted based on different sitting postures, to ensure consistency and comfort of waist support for the user in different sitting postures.

Based on the foregoing content, in this embodiment of this application, the adjustment apparatus may alternatively adjust the inflation volume of the lumbar support airbag based on the second target pressure value and/or a tilt angle of the backrest.

For example, the adjustment apparatus processes the obtained second target pressure value, to obtain a backrest pressure index for describing a backrest discomfort degree. A higher backrest pressure index indicates a higher backrest discomfort degree. A specific calculation method of the pressure index is as follows:

$$\text{index} = a_3 * \frac{F_{max}}{F_{min}} + b_3 * \frac{F_{max}}{F_{mean}}$$

index is the backrest pressure index, $a_3$, $b_3$ is a preset weight coefficient obtained by fitting experimental data, $F_{max}$ is a largest value in a plurality of second target pressure values, $F_{min}$ is a smallest value in the plurality of second target pressure values, and $F_{mean}$ is an average value of the plurality of second target pressure values.

A current backrest-cushion included angle (that is, the foregoing backrest angle) can be obtained through measurement by using a Hall sensor or the like. The adjustment apparatus determines the inflation volume of the lumbar support airbag based on a preset mapping relationship and with reference to the backrest pressure index and the backrest-cushion included angle. In the mapping relationship, the inflation volume of the lumbar support airbag should be positively correlated with the backrest pressure index and negatively correlated with the backrest-cushion included angle (the inflation volume decreases when the backrest is laid down). The following shows an optional mapping relationship as an example:

$$n = a_4 * \text{index} - b_4 * \theta_{pelvis}$$

n is the inflation volume of the lumbar support airbag, $a_4, b_4$ is a preset weight coefficient calibrated by using experimental data, index is the backrest pressure index, and $\theta_{pelvis}$ is the backrest-cushion included angle.

After determining the inflation volume of the lumbar support airbag, the adjustment apparatus controls an air pump and an air valve that are connected to the lumbar support airbag, to inflate the airbag with a corresponding volume of air.

FIG. 16 is a schematic flowchart of a seat adjustment method 800 according to an embodiment of this application. The adjustment method 800 may be applied to the seat 100 provided in the foregoing embodiments, or may be applied to a controller, a processor, or a chip in the seat 100. The adjustment method 800 may be performed by a seat adjustment apparatus, for example, performed by the control apparatus 180 in the seat 100. As shown in FIG. 16, the adjustment method 800 may include the following step 810, step 820, and step 830.

Step 810: The adjustment apparatus obtains a plurality of third pressure values at different positions of a leg rest that are detected by a plurality of detection units of a leg rest pressure sensor, where the plurality of third pressure values include at least one third target pressure value greater than a third threshold.

Step 820: The adjustment apparatus determines a leg length of a user based on position information of a detection unit corresponding to the third target pressure value.

Step 830: The adjustment apparatus adjusts a seat based on the leg length.

The detection unit of the leg rest pressure sensor may also be referred to as a leg rest pressure detection unit. Based on this, the adjustment method 800 may also be understood or described as follows: The adjustment apparatus obtains a plurality of third pressure values detected by a plurality of leg rest pressure detection units, where the plurality of third pressure values include at least one third target pressure value greater than a third threshold; the adjustment apparatus determines a leg length of a user based on position information of a leg rest pressure detection unit corresponding to the third target pressure value; and the adjustment apparatus adjusts a seat based on the leg length.

The seat adjustment method 800 provided in this embodiment of this application is implemented based on the leg rest having the leg rest pressure sensor with the plurality of detection units. The plurality of detection units may be arranged in an array at different positions of the leg rest, so that pressure borne at a plurality of different positions of the leg rest can be detected, and the plurality of third pressure values can be obtained. After obtaining the plurality of third pressure values, the adjustment apparatus determines that the plurality of third pressure values include the third target pressure value greater than the preset third threshold. This indicates that the leg rest bears external pressure. In other words, it can be determined that the user sits on the seat and shins are supported on the leg rest.

A position of the detection unit corresponding to the third target pressure value is a pressure bearing position of the leg rest, that is, an attachment position of a gastrocnemius of the shin of the user. Therefore, the position may be equivalent to a gastrocnemius position of the user. It can be learned based on a skeleton model of a human body and a size feature of the seat that a distance between the knee and the gastrocnemius of the user is in a linear relationship with the leg length, and the distance is in a linear relationship with a distance between the detection unit corresponding to the third target pressure value and an edge that is of the leg rest and that is adjacent to a cushion. Therefore, the leg length of the user may be predicted based on the position information of the detection unit corresponding to the third target pressure value and according to a preset empirical formula. Then, the adjustment apparatus may perform adaptive adjustment on the seat based on the determined leg length, so that personalized ride requirements can be provided for users with different heights, and then ride comfort of the seat can be improved.

In some examples, the third threshold may be a relatively small value slightly greater than zero, and a purpose of setting the third threshold is to avoid false reporting of borne pressure caused by factors such as signal fluctuation and interference. Specifically, when the leg rest does not bear external pressure, a detected value of the detection unit may not be zero due to factors such as signal fluctuation, interference, and a weight of a surface of the leg rest. In some embodiments of this application, these cases can be excluded by setting the preset third threshold, to avoid that the leg of the user is mistakenly considered to be supported on the leg rest in a case that there is no person.

In some examples, compared with the foregoing third threshold related to false reporting of borne pressure, the third threshold may alternatively be a relatively large value. Increasing the third threshold can more accurately determine the pressure bearing position of the leg rest (that is, the gastrocnemius position of the user), in other words, help determine a main pressure bearing position of the leg rest. In this way, the leg length of the user can be more accurately determined. This helps improve precision and accuracy of seat adjustment, and improve ride comfort of the seat.

In some examples, the adjustment apparatus obtains the plurality of third pressure values detected by the plurality of detection units of the leg rest pressure sensor. The plurality of detection units may be in one-to-one correspondence with the plurality of third pressure values, or at least one of the detection units may correspond to a plurality of (for example, two, three, or more) third pressure values. This is not limited in this embodiment of this application.

In some examples, there may be one or more third target pressure values greater than the third threshold in the plurality of third pressure values. When there is one third target pressure value, the waist height of the user may be determined based on position information of a detection unit corresponding to the unique target pressure value. When there are a plurality of third target pressure values, the leg length of the user may be determined based on position information of detection units corresponding to one or more or all of the plurality of third target pressure values.

In some examples, that the adjustment apparatus adjusts the seat based on the leg length may include at least one of the following adjustments:

performing front-rear adjustment on the cushion, performing high-low adjustment on the cushion, adjusting a tilt angle of the cushion, adjusting an extend-retract amount of the leg rest, adjusting a rotation angle of the leg rest, and the like.

In some examples, that the adjustment apparatus adjusts the seat based on the leg length may be: determining a parameter such as a height and/or a physique of the user based on the leg length, and then adjusting the seat based on the parameter such as the height and/or the physique.

In some examples, determining the leg length of the user based on the position information of the detection unit corresponding to the third target pressure value may be:

The adjustment apparatus determines the leg length of the user based on position information of a target detection unit corresponding to a largest pressure value in the third target pressure value.

As a most convex point on the shin, a gastrocnemius center applies a largest extrusion force on the leg rest. Therefore, a position of the target detection unit corresponding to the largest pressure value may be equivalent to a gastrocnemius center position of the user. It can be learned based on a skeleton model of a human body and a structural feature of the seat that a distance between the knee and the gastrocnemius center of the user is in a linear relationship with the leg length, and the distance is in a linear relationship with a distance between the detection unit corresponding to the third target pressure value and an edge that is of the leg rest and that is adjacent to a cushion. Therefore, the leg length of the user may be predicted based on the position information of the target detection unit and with reference to a preset empirical formula. Through the foregoing setting, accuracy and precision of leg length measurement can be improved. This helps improve accuracy and precision of seat adjustment and improve ride comfort of the seat.

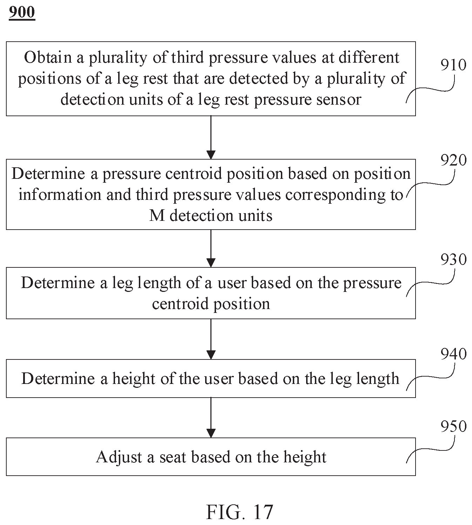

Refer to FIG. 17. FIG. 17 is a schematic flowchart of a seat adjustment method 900 according to an embodiment of this application. The adjustment method 900 may include the following step 910 to step 950. The adjustment method 900 may be considered as a specific implementation of the foregoing adjustment method 800, step 920 and step 930 may be considered as sub-steps of the foregoing step 820, and step 940 and step 950 may be considered as sub-steps of the foregoing step 830. For step 910, refer to the description of step 810 in the foregoing embodiment. Different parts are mainly described herein.

Step 910: An adjustment apparatus obtains a plurality of third pressure values at different positions of a leg rest that are detected by a plurality of detection units of a leg rest pressure sensor, where the plurality of third pressure values include at least one third target pressure value greater than a third threshold.

Step 920: The adjustment apparatus determines (calculates) a pressure centroid position of the leg rest based on position information and obtained third pressure values corresponding to S detection units, where the S detection units include a target detection unit and S-1 detection units arranged in a preset range around the target detection unit, S is an integer greater than or equal to 2, and the foregoing largest pressure value is detected by the target detection unit.

Step 930: The adjustment apparatus determines a leg length of a user based on the pressure centroid position.

The adjustment apparatus obtains the plurality of third pressure values detected by the plurality of detection units. The target detection unit corresponding to the largest pressure value is closest to a gastrocnemius center position of the user, but it cannot be ensured that a position of the target detection unit definitely overlaps the gastrocnemius center position of the user. Therefore, in this embodiment of this application, the pressure centroid position is first calculated based on the largest pressure value and at least one third pressure value in a preset range around the largest pressure value, and then the pressure centroid position may be equivalent to the gastrocnemius center position of the user, so that the determined gastrocnemius center position can be more accurate. Compared with directly equating the position of the target detection unit with the gastrocnemius center position of the user, in this embodiment, the pressure centroid position is calculated and the pressure centroid position is equivalent to the gastrocnemius center position of the user, so that accuracy and precision of leg length detection can be improved, thereby helping improve accuracy and precision of seat adjustment and improve ride comfort of the seat.

A method for determining the pressure centroid position of the leg rest is roughly the same as the method for determining the pressure centroid position of the headrest in the foregoing method 500, and details are not described herein.

Step 940: The adjustment apparatus determines a height of the user based on the leg length.

Step 950: The adjustment apparatus adjusts a seat based on the height.

In some examples, that the adjustment apparatus determines the height of the user based on the leg length may be: performing a summation operation on the leg length and the sitting height obtained through calculation in the foregoing method 500 or method 600, to obtain the height of the user.

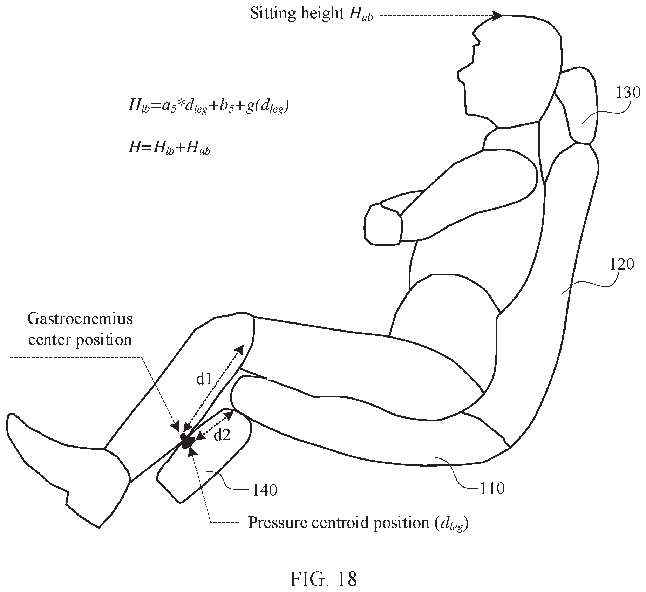

FIG. 18 is a diagram of a principle of determining a leg length of a user based on a pressure centroid position of a leg rest. As shown in FIG. 18, because the pressure centroid position corresponds to a gastrocnemius center position of a user, the pressure centroid position may be equivalent to the gastrocnemius center position of the user. A distance d1 between the knee and the gastrocnemius center position of the user is in a linear relationship with a shin length, and the distance d1 is in a linear relationship with a distance d2 between the pressure centroid position and an edge that is of the leg rest and that is adjacent to a cushion. Therefore, the leg length of the user may be obtained through calculation according to the following formula:

$$H_{lb} = a_5 * d_{leg} + b_5 + g(d_{leg})$$

$H_{lb}$ represents the leg length, $d_{leg}$ represents the pressure centroid position on the leg rest, and $a_5$ and $b_5$ each are a coefficient of a linear relationship between a gastrocnemius center and a shin length. $g(d_{leg})$ is a thigh length calculated based on a human dimension table in "Human dimensions of Chinese adults".

As shown in FIG. 18, after the leg length is obtained, with reference to the sitting height of the user, the height of the user may be obtained through calculation according to the following formula:

$$H = H_{ub} + H_{lb}$$

$H$ represents the height of the user, $H_{ub}$ is the sitting height of the user obtained in the previous step, and $H_{lb}$ represents the leg length of the user.

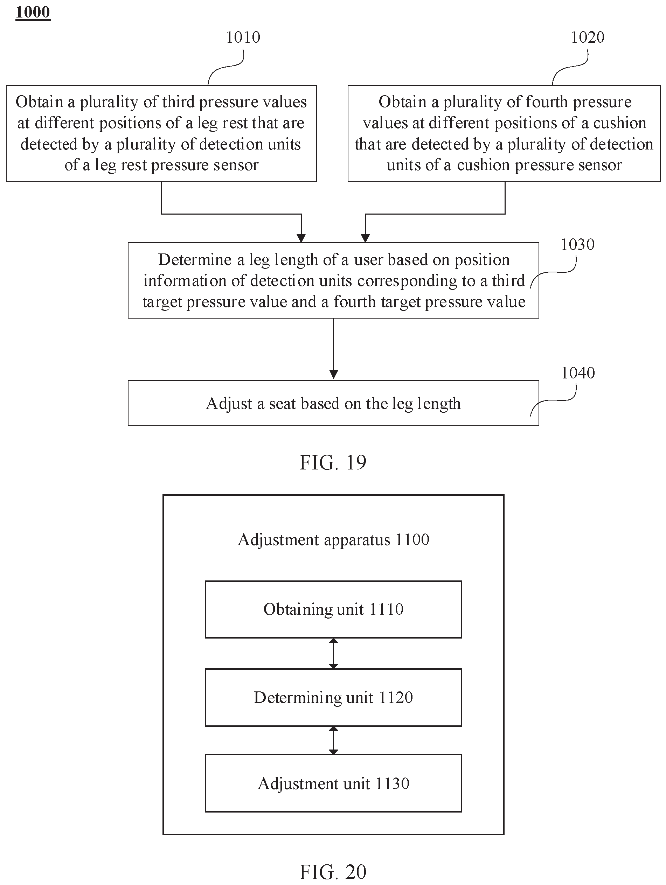

Refer to FIG. 19. FIG. 19 is a schematic flowchart of a seat adjustment method 1000 according to an embodiment of this application. The adjustment method 1000 may include the following step 1010 to step 1040. The adjustment method 1000 may be considered as a specific implementation of the foregoing adjustment method 800, and step 1030 may be considered as a sub-step of the foregoing step 820. For step 1010 and step 1040, respectively refer to the descriptions of step 810 and step 830 in the foregoing embodiment. Different parts are mainly described herein.

Step 1010: An adjustment apparatus obtains a plurality of third pressure values at different positions of a leg rest that are detected by a plurality of detection units of a leg rest pressure sensor, where the plurality of third pressure values include at least one third target pressure value greater than a third threshold.

Step 1020: The adjustment apparatus obtains a plurality of fourth pressure values at different positions of a cushion that are detected by a plurality of detection units of a cushion pressure sensor, where the plurality of fourth pressure values include at least one fourth target pressure value greater than a fourth threshold.

Step 1030: The adjustment apparatus determines a leg length of a user based on position information of detection units corresponding to the third target pressure value and the fourth target pressure value.

Step 1040: The adjustment apparatus adjusts a seat based on the leg length.

The detection unit of the leg rest pressure sensor may also be referred to as a leg rest pressure detection unit, and the detection unit of the cushion pressure sensor may also be referred to as a cushion pressure detection unit. Based on this, the adjustment method 1000 may also be understood or expressed as follows:

The adjustment apparatus obtains a plurality of third pressure values detected by a plurality of leg rest pressure detection units, where the plurality of third pressure values include at least one third target pressure value greater than a third threshold; the adjustment apparatus obtains a plurality of fourth pressure values detected by a plurality of cushion pressure detection units, where the plurality of fourth pressure values include at least one fourth target pressure value greater than a fourth threshold; the adjustment apparatus determines a leg length based on position information of a leg rest pressure detection unit corresponding to the third target pressure value and position information of a cushion pressure detection unit corresponding to the fourth target pressure value; and the adjustment apparatus adjusts a seat based on the leg length.

A sitting posture difference affects a contact position between the leg and the leg rest. Based on this, the adjustment method 1000 provided in this embodiment of this application further considers impact of the sitting posture on a leg length calculation result. The adjustment apparatus may further obtain the plurality of fourth pressure values at the different positions of the cushion that are detected by the plurality of detection units of the cushion pressure sensor. A position of the detection unit corresponding to the fourth target pressure value greater than the preset fourth threshold can represent the sitting posture of the user. Therefore, the leg length of the user may be determined jointly based on the position information of the detection units corresponding to the third target pressure value and the fourth target pressure value. In this way, the leg length obtained through calculation is more accurate. This helps improve accuracy and precision of seat adjustment and improve ride comfort of the seat.

In some examples, the plurality of detection units of the cushion pressure sensor may be arranged in an array at the different positions of the cushion, so that pressure borne at the plurality of different positions of the cushion can be detected and the plurality of fourth pressure values can be obtained. In the description of this application, for ease of differentiation and understanding, a pressure value detected by the detection unit of the headrest pressure sensor is expressed as the first pressure value, and a pressure value greater than the first threshold in the first pressure values is expressed as the first target pressure value; a pressure value detected by the detection unit of the backrest pressure sensor is expressed as the second pressure value, and a pressure value greater than the second threshold in the second pressure values is expressed as the second target pressure value; a pressure value detected by the detection unit of the leg rest pressure sensor is expressed as the third pressure value, and a pressure value greater than the third threshold in the third pressure values is expressed as the third target pressure value; and a pressure value detected by the detection unit of the cushion pressure sensor is expressed as the fourth pressure value, and a pressure value greater than the fourth threshold in the fourth pressure values is expressed as the fourth target pressure value. There is no requirement on a sequence of performing step 1010 and step 1020. For example, step 1010 may be performed before step 1020; or step 1020 may be performed before step 1010; or the two steps are performed simultaneously.

In some examples, similar to the first threshold, the second threshold, and the third threshold, the fourth threshold may be a relatively small value slightly greater than zero, and a purpose of setting the fourth threshold is to avoid false reporting of borne pressure caused by factors such as signal fluctuation and interference. Specifically, when the cushion does not bear external pressure, a detected value of the detection unit may not be zero due to factors such as signal fluctuation, interference, and a weight of a surface of the cushion. In some embodiments of this application, these cases can be excluded by setting the preset fourth threshold, to avoid that the back of the user is mistakenly considered to be attached to the cushion in a case that there is no person. The first threshold, the second threshold, the third threshold, and the fourth threshold may be completely equal, partially equal, or completely unequal. This is not specially limited in embodiments of this application.

In some examples, compared with the foregoing fourth threshold related to false reporting of borne pressure, the fourth threshold may alternatively be a relatively large value. Increasing the fourth threshold can more accurately determine the pressure bearing position of the cushion (that is, the position of the hip of the user), in other words, help determine a main pressure bearing position of the cushion. In this way, the sitting posture and the leg length of the user can be more accurately determined. This helps improve precision and accuracy of seat adjustment, and improve ride comfort of the seat.

In some examples, the adjustment apparatus obtains the plurality of fourth pressure values detected by the plurality of detection units of the cushion pressure sensor. The plurality of detection units may be in one-to-one correspondence with the plurality of fourth pressure values, or at least one of the detection units may correspond to a plurality of (for example, two, three, or more) fourth pressure values. This is not limited in this embodiment of this application.

In some examples, there may be one or more fourth target pressure values greater than the fourth threshold in the plurality of fourth pressure values. When there is one fourth target pressure value, the waist height of the user may be determined based on position information of a detection unit corresponding to the unique target pressure value. When there are a plurality of fourth target pressure values, the waist height of the user may be determined based on position information of detection units corresponding to one or more or all of the plurality of fourth target pressure values.

In some examples, with reference to the adjustment method 800 shown in FIG. 16, in this embodiment of this application, that the adjustment apparatus determines the leg length of the user based on the position information of the detection units corresponding to the third target pressure value and the fourth target pressure value may be as follows:

The adjustment apparatus determines the leg length of the user based on position information of detection units corresponding to a largest pressure value in the third target pressure value and the fourth target pressure value.

Alternatively, the adjustment apparatus determines the leg length of the user based on position information of detection units corresponding to a largest pressure value in the third target pressure value and a largest pressure value in the fourth target pressure value (that is, a largest value in the plurality of fourth pressure values).

Alternatively, the adjustment apparatus determines the leg length of the user based on position information of a detection unit corresponding to a largest pressure value in the third target pressure value and a centroid position of pressure applied by the user on the cushion. For a method for calculating the pressure centroid position on the cushion, refer to the method for calculating the pressure centroid position on the leg rest provided in the foregoing adjustment method 500. Details are not described herein.

In some examples, with reference to the adjustment method 900 shown in FIG. 17, in this embodiment of this application, that the adjustment apparatus determines the leg length of the user based on the position information of the detection units corresponding to the third target pressure value and the fourth target pressure value may alternatively be as follows:

The adjustment apparatus determines the leg length of the user based on a centroid position of pressure applied by the user on the leg rest and the position information of the detection unit corresponding to the fourth target pressure value.

Alternatively, the adjustment apparatus determines the leg length of the user based on a centroid position of pressure applied by the user on the leg rest and position information of a detection unit corresponding to a largest pressure value in the fourth target pressure value.

Alternatively, the adjustment apparatus determines the leg length of the user based on a centroid position of pressure applied by the user on the leg rest and a centroid position of pressure applied by the user on the cushion.

For example, with reference to the foregoing related content in FIG. 18, that the adjustment apparatus determines the leg length of the user based on the position information of the detection units corresponding to the third target pressure value and the fourth target pressure value may be specifically performed according to the following formula:

$$H_{lb} = a_5 * (d_{leg} + f(S_{cushion}, d_{cushion})) + b_5 + g(d_{leg})$$

$H_{lb}$ represents the leg length, $d_{leg}$ represents the pressure centroid position on the leg rest, and $a_5$ and $b_5$ each are a coefficient of a linear relationship between a gastrocnemius center and a shin length. $g(d_{leg})$ is a thigh length calculated based on a human dimension table in "Human dimensions of Chinese adults". $S_{cushion}$ is a pressure area on the surface of the cushion, and $d_{cushion}$ is a pressure centroid position on the surface of the cushion.

It is easy to understand that $f(S_{cushion}, d_{cushion})$ in the foregoing formula represents a correction amount for a gastrocnemius center position of a shin by a sitting posture determining result of the user, and is not a mandatory term. The function may be a linear function, and the coefficient is determined by fitting an experimental result. Alternatively, the function may be a machine learning model trained by using experimental data.

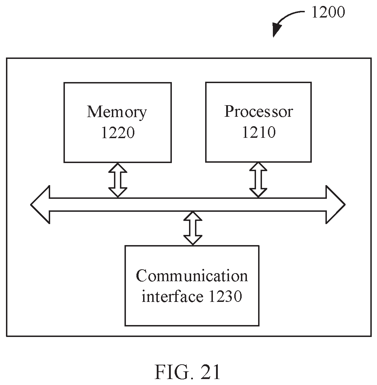

The foregoing describes in detail the methods provided in embodiments of this application with reference to FIG. 1 to FIG. 19. The following describes in detail apparatuses in embodiments of this application with reference to FIG. 20 and FIG. 21. It should be understood that the apparatuses shown in FIG. 20 and FIG. 21 can implement one or more steps in the method procedures shown in FIG. 6 to FIG. 8, FIG. 11, FIG. 12, FIG. 16, FIG. 17, and FIG. 19. To avoid repetition, details are not described herein again.

FIG. 20 is a block diagram of a seat adjustment apparatus 1100 according to an embodiment of this application. As shown in FIG. 20, the adjustment apparatus 1100 includes an obtaining unit 1110, a determining unit 1120, and an adjustment unit 1130.

The obtaining unit 1110 is configured to obtain a plurality of first pressure values detected by a plurality of headrest pressure detection units, where the plurality of first pressure values include at least one first target pressure value greater than a first threshold.

The determining unit 1120 is configured to determine a waist height of a user based on position information of a headrest pressure detection unit corresponding to the first target pressure value.

The adjustment unit 1130 is configured to adjust a height of a lumbar support of a seat based on the waist height.

In some examples, the determining unit 1120 is specifically configured to: when the plurality of first pressure values include a plurality of first target pressure values, determine the waist height based on position information of a target detection unit corresponding to a largest pressure value in the plurality of first target pressure values.

In some examples, the determining unit 1120 is specifically configured to: determine a pressure centroid position based on position information and first pressure values corresponding to M headrest pressure detection units, where the M headrest pressure detection units include the target detection unit and M-1 headrest pressure detection units located in a preset range around the target detection unit, and M≥2; and determine the waist height based on the pressure centroid position.

In some examples, the determining unit 1120 is specifically configured to: determine a sitting height of the user based on the position information of the headrest pressure detection unit corresponding to the first target pressure value; and determine the waist height based on the sitting height.

In some examples, the adjustment unit 1130 is specifically configured to control a lumbar support adjustment component based on the lumbar support adjustment component, to adjust the height of the lumbar support.

In some examples, the lumbar support includes a plurality of lumbar support airbags successively disposed in a height direction, and the adjustment unit 1130 is specifically configured to perform an inflation operation and/or a deflation operation on the plurality of lumbar support airbags, to adjust the height of the lumbar support.

In some examples, the obtaining unit 1110 is further configured to obtain a plurality of second pressure values detected by a plurality of backrest pressure detection units, where the plurality of second pressure values include at least one second target pressure value greater than a second threshold.

The determining unit 1120 is specifically configured to determine the waist height based on the position information of the headrest pressure detection unit corresponding to the first target pressure value and position information of a backrest pressure detection unit corresponding to the second target pressure value.

In some examples, the obtaining unit 1110 is further configured to obtain a plurality of second pressure values detected by a plurality of backrest pressure detection units, where the plurality of second pressure values include a plurality of second target pressure values greater than a second threshold.

The determining unit 1120 is further configured to: determine a back width of the user based on position information of backrest pressure detection units corresponding to the second target pressure values; and determine a target inflation volume of a side wing airbag of the seat based on the back width, where the back width is negatively correlated with the target inflation volume.

The adjustment unit 1130 is further configured to adjust an inflation volume of the side wing airbag based on the target inflation volume.

In some examples, the obtaining unit 1110 is further configured to obtain a plurality of third pressure values detected by a plurality of leg rest pressure detection units, where the plurality of third pressure values include at least one third target pressure value greater than a third threshold.

The determining unit 1120 is further configured to determine a leg length of the user based on position information of a leg rest pressure detection unit corresponding to the third target pressure value.

The adjustment unit 1130 is further configured to adjust the seat based on the leg length.

In some examples, the obtaining unit 1110 is further configured to obtain a plurality of fourth pressure values detected by a plurality of cushion pressure detection units, where the plurality of fourth pressure values include at least one fourth target pressure value greater than a fourth threshold.

The determining unit 1120 is specifically configured to determine the leg length based on the position information of the leg rest pressure detection unit corresponding to the third target pressure value and position information of a cushion pressure detection unit corresponding to the fourth target pressure value.

Specifically, the adjustment apparatus 1100 may correspond to the adjustment apparatus in the foregoing method 300 to method 1000, and may be used in the seat 100 provided in the foregoing embodiments, or may be used in a controller, a processor, or a chip in the seat 100, for example, correspond to the control apparatus 180 in the foregoing embodiments. The adjustment apparatus 1100 may include units configured to perform the methods performed by the adjustment apparatuses in FIG. 6 to FIG. 8, FIG. 11, FIG. 12, FIG. 16, FIG. 17, and FIG. 19. In addition, the units in the adjustment apparatus 1100 and the foregoing other operations and/or functions are separately used to implement corresponding procedures of the method 300 to the method 1000. A specific process of performing the foregoing corresponding steps by the units is described in detail in the method 300 to the method 1000. For brevity, details are not described herein again.

FIG. 21 is a diagram of a structure of a seat adjustment apparatus 1200 according to an embodiment of this application. The adjustment apparatus 1200 may correspond to the adjustment apparatus in the foregoing method 300 to method 1000, and may be used in the seat 100 provided in the foregoing embodiments, or may be used in a controller, a processor, or a chip in the seat 100, for example, correspond to the control apparatus 180 in the foregoing embodiments.

As shown in FIG. 21, the adjustment apparatus 1200 includes a processor 1210, a memory 1220, and a communication interface 1230. The memory 1220 stores instructions, and the processor 1210 is configured to execute the instructions in the memory 1220. When the instructions are executed, the processor 1210 is configured to perform the method provided in the foregoing method embodiments. The processor 1210 is further configured to control the communication interface 1230 to communicate with the outside.

Further, the processor 1210, the memory 1220, and the communication interface 1230 may communicate with each other through an internal connection path, to transfer a control signal and/or a data signal.

Further, the memory 1220 may be integrated into the processor 1210, or may be disposed separately from the processor 1210.

Specifically, the adjustment apparatus 1200 may correspond to the adjustment apparatus in the foregoing method 300 to method 1000, and may be used in the seat 100 provided in the foregoing embodiments, or may be used in a controller, a processor, or a chip in the seat 100, for example, correspond to the control apparatus 180 in the foregoing embodiments. The adjustment apparatus 1200 may include units configured to perform the methods performed by the adjustment apparatuses in FIG. 6 to FIG. 8, FIG. 11, FIG. 12, FIG. 16, FIG. 17, and FIG. 19. In addition, the units in the adjustment apparatus 1200 and the foregoing other operations and/or functions are separately used to implement corresponding procedures of the method 300 to the method 1000. A specific process of performing the foregoing corresponding steps by the units is described in detail in the method 300 to the method 1000. For brevity, details are not described herein again.

An embodiment of this application further provides a computer-readable storage medium. The computer-readable storage medium includes a computer program. When the computer program is run on a computer, the computer is enabled to perform the methods provided in the foregoing method embodiments.

An embodiment of this application further provides a computer program product including instructions. When the computer program product runs on a computer, the computer is enabled to perform the methods provided in the foregoing method embodiments.

An embodiment of this application further provides a chip system, including a memory and a processor. The memory is configured to store a computer program, and the processor is configured to invoke the computer program from the memory and run the computer program, to enable a device on which the chip system is installed to perform the methods provided in the foregoing method embodiments.

The chip system may include an output circuit or interface for sending information or data, and an input circuit or interface for receiving information or data.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A seat adjustment method, comprising:

   obtaining a plurality of first pressure values detected by a plurality of headrest pressure detection units, wherein the plurality of first pressure values comprise at least one first target pressure value greater than a first threshold;
   determining a waist height of a user based on position information of a headrest pressure detection unit corresponding to the first target pressure value; and
   adjusting a height of a lumbar support of a seat based on the waist height.

2. The adjustment method according to claim **1,** wherein determining the waist height of the user comprises:
   when the plurality of first pressure values comprise a plurality of first target pressure values, determining the waist height based on position information of a target detection unit corresponding to a largest pressure value in the plurality of first target pressure values.

3. The adjustment method according to claim 2, wherein determining the waist height of the user comprises:

   determining a pressure centroid position based on position information and first pressure values corresponding to M headrest pressure detection units, wherein the M headrest pressure detection units comprise the target detection unit and M-1 headrest pressure detection units located in a preset range around the target detection unit, and M$\geq$2; and
   determining the waist height based on the pressure centroid position.

4. The adjustment method according to any one of claims 1 to 3, wherein determining the waist height of the user comprises:

   determining a sitting height of the user based on the position information of the headrest pressure detection unit corresponding to the first target pressure value; and
   determining the waist height based on the sitting height.

5. The adjustment method according to any one of claims 1 to 4, wherein adjusting the height of the lumbar support of the seat comprises:
   controlling a lumbar support adjustment component based on the lumbar support adjustment component, to adjust the height of the lumbar support.

6. The adjustment method according to any one of claims 1 to 4, wherein the lumbar support comprises a plurality of lumbar support airbags successively disposed in a height direction, and adjusting the height of the lumbar support of the seat comprises:
   performing an inflation operation and/or a deflation operation on the plurality of lumbar support airbags, to adjust the height of the lumbar support.

7. The adjustment method according to any one of claims 1 to 6, wherein the adjustment method further comprises:

   obtaining a plurality of second pressure values detected by a plurality of backrest pressure detection units, wherein the plurality of second pressure values comprise at least one second target pressure value greater than a second threshold; and
   determining the waist height of the user comprises:
   determining the waist height based on the position information of the headrest pressure detection unit corresponding to the first target pressure value and position information of a backrest pressure detection unit corresponding to the second target pressure value.

8. The adjustment method according to any one of claims 1 to 6, wherein the adjustment method further comprises:

   obtaining a plurality of second pressure values detected by a plurality of backrest pressure detection units, wherein the plurality of second pressure values comprise a plurality of second target pressure values greater than a second threshold;
   determining a back width of the user based on position information of backrest pressure detection units corresponding to the second target pressure values;

determining a target inflation volume of a side wing airbag of the seat based on the back width, wherein the back width is negatively correlated with the target inflation volume; and

adjusting an inflation volume of the side wing airbag based on the target inflation volume.

9. The adjustment method according to any one of claims 1 to 8, wherein the adjustment method further comprises:

obtaining a plurality of third pressure values detected by a plurality of leg rest pressure detection units, wherein the plurality of third pressure values comprise at least one third target pressure value greater than a third threshold; determining a leg length of the user based on position information of a leg rest pressure detection unit corresponding to the third target pressure value; and

adjusting the seat based on the leg length.

10. The adjustment method according to claim 9, wherein the adjustment method further comprises:

obtaining a plurality of fourth pressure values detected by a plurality of cushion pressure detection units, wherein the plurality of fourth pressure values comprise at least one fourth target pressure value greater than a fourth threshold; and

determining the leg length of the user comprises:

determining the leg length based on the position information of the leg rest pressure detection unit corresponding to the third target pressure value and position information of a cushion pressure detection unit corresponding to the fourth target pressure value.

11. A seat adjustment apparatus, comprising:

a memory, wherein the memory stores instructions; and

a processor, wherein when the instructions are run by the processor, the adjustment apparatus is enabled to perform the method according to any one of claims 1 to 10.

12. A computer-readable storage medium, wherein the computer-readable storage medium stores a computer program, and when the computer program is run on a computer, the computer is enabled to perform the method according to any one of claims 1 to 10.

13. A seat, comprising:

a headrest;

a headrest pressure sensor, comprising a plurality of detection units arranged in an array at different positions of the headrest, wherein the headrest pressure sensor is configured to detect a value of pressure applied on the headrest; and

the adjustment apparatus according to claim 11, which is in communication connection to the headrest pressure sensor.

14. A vehicle, comprising the adjustment apparatus according to claim 11 or the seat according to claim 13.

FIG. 1

FIG. 2

FIG. 3

A pressure sensor 200 collects data of pressure applied by a passenger on a seat 100 — S1

| Headrest pressure | Backrest pressure | Cushion pressure | Leg rest pressure |

A control apparatus 180 performs passenger recognition — S2

| Sitting height | Height | Weight | Physique | Sitting posture |

The control apparatus 180 performs preliminary adjustment on the seat 100 — S3

| Up-and-down adjustment of a lumbar support airbag | Up-and-down adjustment of a headrest | Inflation volume adjustment of a side wing airbag |

The control apparatus 180 performs real-time adjustment on the seat 100 — S4

| Inflation volume adjustment of the side wing airbag | Inflation volume adjustment of the lumbar support airbag |

FIG. 4

FIG. 5

300

| Obtain a plurality of first pressure values at different positions of a headrest that are detected by a plurality of detection units of a headrest pressure sensor | 310 |

Determine a waist height of a user based on position information of a detection unit corresponding to a first target pressure value — 320

Adjust a height of a lumbar support of a seat based on the waist height — 330

FIG. 6

400

Obtain a plurality of first pressure values at different positions of a headrest that are detected by a plurality of detection units of a headrest pressure sensor — 410

Is there a first target pressure value? — 420

Determine a waist height of a user based on position information of a target detection unit corresponding to a largest pressure value — 430

Adjust a height of a lumbar support of a seat based on the waist height — 440

FIG. 7

**500**

Obtain a plurality of first pressure values at different positions of a headrest that are detected by a plurality of detection units of a headrest pressure sensor — 510

Determine a pressure centroid position based on position information and first pressure values corresponding to M detection units — 520

Determine a waist height of a user based on the pressure centroid position — 530

Adjust a height of a lumbar support of a seat based on the waist height — 540

FIG. 8

Pressure centroid position

200b

200a

(a)

Pressure centroid position

200a

200b

130

230

(b)

FIG. 9

Sitting height $H_{ub}$

Opisthocranion position

230

Pressure centroid position (height $d_{head}$)

130

$$H_{ub}=a_1*d_{head}+b_1$$

$$H_{l3}=a_2*H_{ub}+b_2$$

120

FIG. 10

600

610

Obtain a plurality of first pressure values at different positions of a headrest that are detected by a plurality of detection units of a headrest pressure sensor

620

Obtain a plurality of second pressure values at different positions of a backrest that are detected by a plurality of detection units of a backrest pressure sensor

630

Determine a waist height of a user based on position information of detection units corresponding to a first target pressure value and a second target pressure value

640

Adjust a height of a lumbar support of a seat based on the waist height

FIG. 11

700

710

Obtain a plurality of second pressure values at different positions of a backrest that are detected by a plurality of detection units of a backrest pressure sensor

720

Determine a back width of a user based on position information of a detection unit corresponding to a second target pressure value

730

Determine a target inflation volume of a side wing airbag based on the back width

740

Adjust an inflation volume of the side wing airbag based on the target inflation volume

FIG. 12

FIG. 13

FIG. 14

60

Lumbar
lordosis
angle (°)

- - -■- - - Adult group
———●——— Kid group

50

40

30

20

10

0

Standing posture | Lying posture | Sitting (30°) | Sitting (60°) | Sitting (90°)

FIG. 15

**800**

```
Obtain a plurality of third pressure values at different
positions of a leg rest that are detected by a plurality     810
of detection units of a leg rest pressure sensor
```

```
Determine a leg length of a user based on position          820
information of a detection unit corresponding to a
third target pressure value
```

```
Adjust a seat based on the leg length                        830
```

FIG. 16

**900**

```
Obtain a plurality of third pressure values at different
positions of a leg rest that are detected by a plurality of     910
detection units of a leg rest pressure sensor
```

```
Determine a pressure centroid position based on position       920
information and third pressure values corresponding to
M detection units
```

```
Determine a leg length of a user based on the pressure         930
centroid position
```

```
Determine a height of the user based on the leg length         940
```

```
Adjust a seat based on the height                              950
```

FIG. 17

$$H_{lb}=a_5*d_{leg}+b_5+g(d_{leg})$$

$$H=H_{lb}+H_{ub}$$

Sitting height $H_{ub}$ - - - - - - - - - - - - - ▶

130

120

Gastrocnemius center position

d1

d2

140

110

Pressure centroid position ($d_{leg}$)

FIG. 18

**1000**

1010

1020

Obtain a plurality of third pressure values at different positions of a leg rest that are detected by a plurality of detection units of a leg rest pressure sensor

Obtain a plurality of fourth pressure values at different positions of a cushion that are detected by a plurality of detection units of a cushion pressure sensor

Determine a leg length of a user based on position information of detection units corresponding to a third target pressure value and a fourth target pressure value

1030

Adjust a seat based on the leg length

1040

FIG. 19

Adjustment apparatus 1100

Obtaining unit 1110

Determining unit 1120

Adjustment unit 1130

FIG. 20

1200

```
┌─────────────────────────────────────────┐
│                                         │
│   ┌──────────────┐   ┌──────────────┐   │
│   │              │   │              │   │
│   │   Memory     │   │  Processor   │   │
│   │    1220      │   │    1210      │   │
│   │              │   │              │   │
│   └──────┬───────┘   └──────┬───────┘   │
│          ⇕                  ⇕           │
│   ◁══════════════════════════════════▷  │
│                  ⇕                      │
│          ┌──────────────────┐           │
│          │  Communication   │           │
│          │  interface 1230  │           │
│          └──────────────────┘           │
│                                         │
└─────────────────────────────────────────┘
```

FIG. 21

## INTERNATIONAL SEARCH REPORT

| | International application No. |
|---|---|
| | **PCT/CN2025/080074** |

**A. CLASSIFICATION OF SUBJECT MATTER**

B60N2/02(2006.01)i

According to International Patent Classification (IPC) or to both national classification and IPC

**B. FIELDS SEARCHED**

Minimum documentation searched (classification system followed by classification symbols)

IPC: B60N

Documentation searched other than minimum documentation to the extent that such documents are included in the fields searched

Electronic data base consulted during the international search (name of data base and, where practicable, search terms used)

CNTXT, ENTXTC, WPABSC, CJFD: 头枕, 枕头, 压力, 阵列, 矩阵, 腰托, 腰, 支撑, 支承, 位置, 高度; ENTXT, VEN, WPABS, DWPI: pillow, headrest, pressure, array, matrix, row, lumbar, waist, support, position, height.

**C. DOCUMENTS CONSIDERED TO BE RELEVANT**

| Category* | Citation of document, with indication, where appropriate, of the relevant passages | Relevant to claim No. |
|---|---|---|
| X | CN 108058630 A (YANFENG ADIENT SEATING CO., LTD.) 22 May 2018 (2018-05-22) description, paragraphs 58-117, and figures 1-24 | 1-14 |
| X | CN 110696693 A (YANFENG ADIENT SEATING CO., LTD.) 17 January 2020 (2020-01-17) description, paragraphs 29-49, and figures 1-3B | 1-14 |
| A | CN 107089170 A (BOE TECHNOLOGY GROUP CO., LTD.) 25 August 2017 (2017-08-25) entire document | 1-14 |
| A | CN 115848249 A (SCI SEATING (NINGBO) CO., LTD.) 28 March 2023 (2023-03-28) entire document | 1-14 |
| A | KR 102086789 B1 (NA WAN KI et al.) 10 March 2020 (2020-03-10) entire document | 1-14 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 May 2025** | **22 May 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2025/080074**

| Patent document cited in search report | | | Publication date (day/month/year) | Patent family member(s) | | | Publication date (day/month/year) |
|---|---|---|---|---|---|---|---|
| CN | 108058630 | A | 22 May 2018 | CN | 108058630 | B | 05 May 2020 |
| CN | 110696693 | A | 17 January 2020 | CN | 110696693 | B | 05 February 2021 |
| CN | 107089170 | A | 25 August 2017 | CN | 107089170 | B | 06 September 2019 |
| CN | 115848249 | A | 28 March 2023 | | None | | |
| KR | 102086789 | B1 | 10 March 2020 | | None | | |

Form PCT/ISA/210 (patent family annex) (July 2022)

**EP 4 759 627 A1**

**Patent documents cited in the description**

- CN 202410674595